(19) Europäisches Patentamt
European Patent Office
Office européen des brevets

(11) EP 2 912 133 B1

(12) # EUROPÄISCHE PATENTSCHRIFT

(45) Veröffentlichungstag und Bekanntmachung des Hinweises auf die Patenterteilung:
**01.02.2017 Patentblatt 2017/05**

(21) Anmeldenummer: **13782975.0**

(22) Anmeldetag: **23.10.2013**

(51) Int Cl.:
***C09K 5/16*** $^{(2006.01)}$ ***F28D 20/00*** $^{(2006.01)}$

(86) Internationale Anmeldenummer:
**PCT/EP2013/003192**

(87) Internationale Veröffentlichungsnummer:
**WO 2014/063814 (01.05.2014 Gazette 2014/18)**

(54) **VERFAHREN ZUR THERMOCHEMISCHEN WÄRMESPEICHERUNG UND VERWENDUNG EINER ZUSAMMENSETZUNG FÜR DIESES VERFAHREN, ENTHALTEND EIN SALZ AUS EINER ORGANISCHEN BASE UND EINER ORGANISCHEN SÄURE**

METHOD FOR THERMOCHEMICALLY STORING HEAT, AND USE OF A COMPOSITION FOR SAID METHOD, CONTAINING A SALT MADE OF AN ORGANIC BASE AND AN ORGANIC ACID

PROCÉDÉ D'ACCUMULATION THERMOCHIMIQUE DE CHALEUR ET UTILISATION POUR CE PROCÉDÉ D'UNE COMPOSITION CONTENANT UN SEL D'UNE BASE ORGANIQUE ET D'UN ACIDE ORGANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2012 DE 102012219383**
**25.02.2013 DE 102013203078**

(43) Veröffentlichungstag der Anmeldung:
**02.09.2015 Patentblatt 2015/36**

(73) Patentinhaber: **Fraunhofer Gesellschaft zur Förderung der angewandten Forschung e.V.
80686 München (DE)**

(72) Erfinder:
- **BRUZZANO, Stefano
47051 Duisburg (DE)**
- **FISCHER, Matthias
47057 Duisburg (DE)**
- **DEERBERG, Goerge
46419 Alpen (DE)**
- **ZEIDLER- FANDRICH, Barbara
46117 Oberhausen (DE)**
- **SALAZAR GOMEZ, Jorge Ivan
46049 Oberhausen (DE)**
- **MARZI, Thomas
47249 Duisburg (DE)**

(56) Entgegenhaltungen:
**EP-A2- 2 194 826**
**WO-A1-2011/089322**
**DE-A1- 10 316 418**
**DE-A1-102010 009 543**
**US-A1- 2006 080 960**
**US-A1- 2009 071 153**
**US-A1- 2012 192 856**

- **WENTWORTH W E ET AL: "Simple thermal decomposition reactions for storage of solar thermal energy", SOLAR ENERGY, PERGAMON PRESS. OXFORD, GB, Bd. 18, Nr. 3, 1. Januar 1976 (1976-01-01) , Seiten 205-214, XP025451358, ISSN: 0038-092X, DOI: 10.1016/0038-092X(76)90019-0 [gefunden am 1976-01-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 912 133 B1

## Beschreibung

Energiespeicher ermöglichen es, ein schwankendes Energieangebot mit einer zeitlich und/oder räumlich schwankenden Energienachfrage in Einklang zu bringen, indem überschüssige Energie gespeichert und zu anderer Zeit und/oder an einem anderen Ort wieder freigesetzt und dort genutzt wird. Energiespeicher nehmen daher in der Entwicklung effizienter Energieversorgungssysteme eine Schlüsselstellung ein. Neben elektrischen Speichern sind auch thermische, mechanische und stoffliche Speicher wichtige Bausteine einer integrierten Netzstruktur.

Hierbei umfasst das Profil für thermische Speicher folgende Anforderungen:

- hohe Speicherdichten bei gleichzeitig geringen Energieverlusten,
- Möglichkeiten zur Anpassung der Materialeigenschaften (Speicherdichte, Wärmeleitfähigkeit, spez. Volumen, Viskosität etc.) und
- gute Umweltverträglichkeit der Speichermaterialien.

Große Erwartungen werden an thermochemische Speicher geknüpft, die eine Wärmespeicherung auf vergleichsweise kleinem Raum durch thermisch reversible chemische Reaktionen ermöglichen. Thermochemische Energiespeicher nutzen dabei die Reaktionsenthalpie reversibler chemischer Reaktionen zur Energiespeicherung, indem Wärme über endotherme Umsetzungen chemisch gespeichert und bei den entsprechend exothermen Rückreaktionen wieder abgegeben wird.

Verglichen mit Latent- oder Sorptions-Wärmespeichern bzw. mit Systemen, die einen Phasenwechsel (Phase Change Materials) des Materials zur Energiespeicherung nutzen, sind die erzielbaren spezifischen Energiedichten bei thermochemischen Energiespeichern deutlich höher.

Materialentwicklungen zur thermochemischen Speicherung erfolgen z. Zt. überwiegend für Applikationen auf hohem Temperaturniveau über 250°C. Für Applikationen im Temperaturbereich kleiner 250°C existieren lediglich vereinzelte Lösungsansätze. Derartige Applikationen würden aber ein vielfältiges und zudem ökonomisch interessantes Anwendungsfeld eröffnen: Saisonale Speicherung von Solarenergie zur Gebäudebeheizung, Nutzung von Niedertemperaturabwärme von Produktionsprozessen, Entwicklung mobiler Kühl- und Klimatisierungssysteme. Vor allem der Haustechnikbereich bietet aufgrund der vielen dezentralen Anwendungsfälle für Speichertechnologien das Potenzial für eine Massenproduktion. Figur 1 zeigt die Speicherdichten von verschiedenen Energiespeichermethoden in Abhängigkeit ihrer spezifischen thermischen Anwendungsbereiche (nach: Renewable and Sustainable Energy Reviews 13 (2009), 2385).

Die bislang betrachteten Reaktionssysteme werden i. a. nach dem Temperaturniveau der Wärmespeicherung eingeteilt. Im oberen Temperaturbereich, d.h. über 250°C, wurde die Anwendung von Erdalkalicarbonaten, -hydriden oder -hydroxiden für Wärmespeicher beschrieben. Ferner sind eine Reihe niedermolekularer thermochemischer Speichermaterialien bekannt, insbesondere anorganische Materialien und Materialien für Temperaturen über 200 °C:

> In der US 4054126 werden verschiedene Erdalkalihydroxide (CaOH, $Mg(OH)_2$ und $Ba(OH)_2$) zur Wärmespeicherung verwendet. Die thermische Zersetzung findet bei Temperaturen zwischen 300°C und 900 °C statt. Im Hochtemperaturbereich lassen sich somit Speicherdichten bis zu 2500 kWh/$m^3$ bzw. 9000 MJ/$m^3$ erzielen.

Im Mittel- und Niedertemperaturbereich (< 250°C) sind heute im Wesentlichen Sorptions- bzw. PCM-Speicher mit Speicherdichten von ca. 125 bis 250 kWh/$m^3$ verfügbar. Die Energiedichten sind bis zu viermal so hoch wie bei herkömmlichen Warmwasserspeichern.

Eine thermochemische Methode für Speicher- und Anwendungstemperaturen unterhalb 250 °C wird in der DE 3342847 skizziert, wobei Wärme aus der Hydration von konzentrierter Schwefelsäure gewonnen wird. Die US 4303121 offenbart die Hydratbildung von $CaSO_4$ zur thermochemischen Speicherung von Wärme und die US 4319627 die Bildung von Ammoniakaten, z.B. des $CaCl_2$, zur Nutzung in der Kälte- und Klimatechnik. Auch die Speicherung mittels anorganischer Redoxreaktionen mit Ni-, Zn- oder Ce-Oxiden wird beschrieben

WENTWORTH W.E. ET AL: "Simple thermal decomposition reactions for storage of solar thermal energy", SOLAR ENERGY, Bd. 18, Nr. 3, 1976, Seiten 205-214 offenbart die Verwendung von reversiblen endothermen chemischen Spaltungsreaktionen, z.B. von NH4Cl, für die Speicherung von solarer Wärmeenergie. Die Spaltungsreaktionen werden bei ca. 500 °C durchgeführt.

Der Einsatz der vorstehend genannten Reaktionssysteme erfordert vielfach eine komplizierte und teure Verfahrenstechnik, insbesondere da die Materialien schlecht oder gar nicht pumpfähig sind und da es sich teilweise um Mehrphasensysteme handelt. Darüber hinaus besitzen einige der beschriebenen, anorganischen Substanzen eine erhöhte Korrosionsneigung und Toxizität, ein stark eingeschränktes nutzbares Temperaturniveau oder einen unzureichenden Wärmeübergang vom bzw. zum Wärmespeichermaterial. Letzteres führt zu geringen Leistungsdichten des Wärmespeichers. Die dringend erforderliche Anpassung der Materialeigenschaften ist mit den oben genannten Energiespeichermedien durch Strukturvariation nicht oder nur schwer erreichbar. Vielmehr können die Eigenschaften nur durch die Verwendung weiterer Systemkomponenten wie Trägerphasen, Wärmeübergangs- und Viskomodifier an die praktischen Anforderungen angepasst werden.

Polymere Strukturen sind als thermochemische Speicher weitgehend unbekannt und werden lediglich als PCM oder als funktionale Hilfsstoffe eingesetzt, die nicht oder nur in geringem Umfang zur Wirkung als Energiespeicher beitragen (z.B. Hilfsstoffe zur Verbesserung des Stoff- und Wärmeaustausches durch Verkapselung oder zur Einbettung von thermoaktiven Substanzen). Nur die DE 3025817 A1 offenbart ein Verfahren zur Wärmespeicherung über eine thermoreversible Polymerisation, nämlich von Acetaldehyd zu Paraldehyd. Allerdings ist die Wärmeleitfähigkeit derartiger Systeme niedrig. Der vorliegenden Erfindung liegt daher die Aufgabe zugrunde, die vorstehend beschriebenen Probleme zumindest teilweise zu beseitigen und eine Zusammensetzung anzugeben, die als thermochemischer Speicher geeignet ist und auf organischen, vorzugsweise nicht toxischen Materialien basiert.

Diese Aufgabe wird durch den Gegenstand der unabhängigen Ansprüche gelöst. Unteransprüche, Beschreibung, Zeichnungen und Beispiele lehren vorteilhafte Weiterbildungen.

Erfindungsgemäß wird vorgeschlagen, eine Zusammensetzung, die ein Salz aus einer organischen Base und einer organischen Säure umfasst oder hieraus besteht, für die thermochemische Wärmespeicherung einzusetzen. Die Zusammensetzung kann hierbei aus einer ionischen Flüssigkeit bestehen oder eine ionische Flüssigkeit enthalten, oder aus einer ionischen Flüssigkeit und einem Lösungsmittel bestehen oder diese beiden Komponenten enthalten.

Alternativ kann die Zusammensetzung eine Flüssigkeit sein, die als Anion des Salzes eine polymere (organische) Base und/oder als Kation eine polymere (organische) Säure und gegebenenfalls zusätzlich ein Lösungsmittel enthält, wobei die Zusammensetzung wiederum aus dem Salz oder dem Salz und dem Lösungsmittel bestehen kann oder aber das Salz und Lösungsmittel enthält oder hieraus besteht.

Schließlich kann die Zusammensetzung ein (als Reinsubstanz) bei Raumtemperatur festes Salz sein, das in einem Lösungsmittel dispergiert oder gelöst vorliegt, mit der Maßgabe dass die diesem dispergierten oder gelösten Salz zugrundeliegende Base eine Stickstoff-Base ist und eine Molmasse kleiner als 250 g/mol, insbesondere kleiner 200 g/mol, besitzt und/oder die diesem dispergierten oder gelösten Salz zugrundeliegende Säure eine Molmasse kleiner als 250 g/mol, insbesondere kleiner 200 g/mol, besitzt. Hierbei kann die Zusammensetzung aus dem Salz und dem Lösungsmittel bestehen oder diese beiden Komponenten enthalten.

Bei allen vorstehend genannten Zusammensetzungen kann das in der Zusammensetzung enthaltene Salz mittels einer reversiblen endothermen Spaltungsreaktion zumindest teilweise in die freie (Brönstedt-)Säure und die freie Base getrennt werden (und damit - aufgrund der Tatsache, dass im Regelfall eine Gleichgewichtsreaktion vorliegt - auch in die hiermit korrespondierenden Anionen und Kationen).

Unter einer ionischen Flüssigkeit werden erfindungsgemäß Salzschmelzen mit niedrigen Schmelzpunkten verstanden, das heißt insbesondere die bei Umgebungstemperatur (25°C) flüssige Salze, aber auch noch Salze, die unter 100 °C schmelzen. Als ionische Flüssigkeiten sind - wie den vorstehenden Ausführungen zu entnehmen ist - nur "protic ionic liquids" geeignet. Als erfindungsgemäß geeignete ionische Flüssigkeiten seien beispielsweise Trialkylammoniumacetate, Trialkylammoniumformiate und/oder Trialkylammoniumlactate genannt.Für bestimmte Anwendungen können hierbei die Alkylreste jeweils mindestens fünf Kohlenstoffatome aufweisen, für leichter destillierbare Verbindungen sind aber auch Alkylreste mit weniger als fünf Kohlenstoffatomen sinnvoll.

Wie bei allen anderen Salzen der erfindungsgemäßen Zusammensetzung ist wesentlich, dass das Salz (hier die ionische Flüssigkeit) durch eine Säure-Base-Reaktion bzw. eine Neutralisationsreaktion herstellbar ist. Die dabei freigesetzte Energiemenge resultiert im Wesentlichen aus der bei der bei der Neutralisation erfolgenden Protonenübertragung und der Solvatisierung des Salzes. Ist die erfindungsgemäße Zusammensetzung eine Flüssigkeit, die als Anion des Salzes eine polymere (organische) Base und/oder als Kation eine polymere (organische) Säure aufweist, so eignen sich als Anionen insbesondere Polymere mit Carboxylatgruppen, wie beispielsweise Polyacrylate, und als Kationen Polymere mit tertiären Ammoniumgruppen, wie beispielsweise protonierte, alkylierte Polyethylenimine oder Dialkylpolyvinylamine oder Polydiallylalkylamine oder Polyvinylimidazole. Unter einem Polymer sind dabei - wie stets im Rahmen der vorliegenden Anmeldung - auch solche Polymere zu verstehen, die aus mehr als fünf Monomereinheiten aufgebaut sind.

Die Verwendung einer Mischung aus ionischer Flüssigkeit und/oder einem Salz mit polymerem Anion und/oder Kation einerseits und Lösungsmittel andererseits, insbesondere mit dem Lösungsmittel Wasser, kann sinnvoll sein, wenn beispielsweise die Wärmeleitfähigkeit des Systems verbessert werden soll oder bei als Reinsubstanz festen Salzen durch Dispersion oder Lösung dieses Salzes im Lösungsmittel ein Gemisch entsteht, das regelmäßig eine niedrigere Viskosität aufweist als die Reinsubstanz und damit beispielsweise zu einer Verbesserung der Pumpbarkeit dienen kann. Generell kann durch Zusatz eines Lösungsmittels die Pumpbarkeit im Regelfall deutlich verbessert werden. Ist die Zusammensetzung ein (als Reinsubstanz) bei Raumtemperatur festes Salz, das in einem Lösungsmittel dispergiert oder gelöst vorliegt, so ergeben sich aus den vorstehend näher angegebenen Strukturvoraussetzungen folgende Vorteile: Zum einen ist die Abtrennbarkeit über Destillation des freien Amins bzw. der freien Säure erleichtert, da die Höhe des Siedepunktes in bekannter Weise von der Molmasse abhängt. Zum anderen ergeben sich höhere Energiedichten für

das Material durch den Einsatz kleiner Molmassen bzw, Molvolumina (vgl. Fig. 4). Das gilt gleichermaßen, wenn die Differenz der $pk_s$-Werte zwischen Base und Säure ansteigt. Im Regelfall wird allerdings - insbesondere bei Säurekomponenten mit einem $pk_s$ Wert größer 4 - ab einer $pk_s$ Differenz (zwischen organischer Säure und organischer Base) größer 10 eine thermische Spaltung der Verbindung nicht mehr möglich sein. Daher wird die $pk_s$ Differenz - insbesondere bei Säurekomponenten mit einem $pk_s$ Wert größer 4 - zwischen organischer Säure und organischer Base häufig 3 bis 10, insbesondere 4 bis 9; betragen.

Geeignete erfindungsgemäße Zusammensetzungen, die bei Raumtemperatur als Dispersion vorliegen, in der das Salz als Feststoff vorliegt, sind beispielsweise Tetramethylguanidinium-Salze (vergleiche hierzu Figur 4), etwa Tetramethylguandiniumacetat, die in hydrophoben Lösemitteln wie beispielsweise Kohlenwasserstoff-Gemischen dispergiert sind. Insbesondere bei derartigen Systemen können zusätzlich Dispergiermittel in der erfindungsgemäßen Zusammensetzung zugegen sein.

Zusammenfassend eignen sich für die erfindungsgemäßen Zusammensetzungen Systeme, die ein Salz umfassen, das in freie Säure und freie Base trennbar ist und zudem zumindest bei der Temperatur, die während der Spaltung in freie Säure oder freie Base vorliegt, flüssig oder zumindest nicht vollständig fest sind.

Als mittels einer Spaltungsreaktion trennbar anzusehen sind insbesondere Salze, bei denen freie Säure und freie Base voneinander gegebenenfalls auch mit Hilfe eines Lösungsmittels durch Verfahren wie Destillation, beispielsweise azeotrope Destillation, Extraktion, Ultrafiltration, Nanofiltration, Pervaporation, Elektrodialyse und dergleichen voneinander oder durch ein anderes thermisches oder mechanisches Trennverfahren getrennt werden können.

• Erfindungsgemäß wurde erkannt, dass mittels der vorstehend beschriebenen erfindungsgemäßen Zusammensetzungen thermochemische Energiespeicher zur Verfügung gestellt werden können, die eine effiziente und schnelle Energiespeicherung von Wärme ermöglichen als die Systeme des Stands der Technik. Im Vergleich zu klassischen Energiespeichersystemen, wie z.B. Latentwärme- oder PCM-Speichern, ist hierbei durch die Auftrennung eine Langzeitspeicherung möglich. Ferner sind diese Systeme hinsichtlich Temperatur- und Druckvarianz flexibler einsetzbar und es lassen sich durch die Nutzung von chemischen Reaktionen deutlich höhere Speicher- und Leistungsdichten erzielen.

Ohne sich hierauf beschränken zu wollen, kann diese besondere Eignung der erfindungsgemäßen Zusammensetzungen folgendermaßen begründet werden:

In einem thermochemischen Wärmespeichersystem kann die Reaktionsenthalpie $\Delta H_R$ beispielsweise über eine endotherme Spaltungsreaktion des Neutralisationsproduktes HB_A gespeichert werden und nachfolgend durch die Rückreaktion der beiden Zerfallskomponenten Säure HA und Base B zurückgewonnen werden:

$$HB_A + \Delta H_R \leftrightarrow B + HA$$

Im Umkehrpunkt der Reaktion ist die Gleichgewichtskonstante K gleich eins. Für die freie Standardreaktionsenthalpie gilt hier:

$$\Delta H_R - T\Delta S_R = 0$$

Gemäß dieser Gleichung ist dann die Temperatur am Umkehrpunkt:

$$T^* = \Delta H_R/\Delta S_R$$

Für eine erwünschte, vorzugsweise hohe Reaktionsenthalpie bzw. hohe Energiedichte des thermochemischen Reaktionssystems, wird diese charakteristische Temperatur hoch sein. Ein Aufladen des thermochemischen Speichers ist somit nur bei entsprechend hohen Temperaturen möglich. Bei Reaktionen die neben einer hohen Standardreaktionsenthalpie $\Delta_R H°$ auch eine hohe Standardreaktionsentropie $\Delta_R S°$ gleichen Vorzeichens aufweisen, werden vergleichsweise niedrige Umkehrtemperaturen erreicht. Ferner müssen die physikalischen, chemischen Eigenschaften der Edukte HA und B sich derart unterscheiden, dass ihre thermische Trennung (Aufladen des Speichers) im avisierten Niedertemperatur-Bereich möglich ist.

Thermisch reversible Neutralisationsreaktionen von Säuren (HA) und Basen (B) haben daher das Vermögen zur Erzeugung der benötigten neuen thermochemischen Speichermaterialien mit maßgeschneiderten Materialeigenschaften und Speicherdichten in der Größenordnung von 500 $kWh/m^3$.

Mit den erfindungsgemäßen Zusammensetzungen können die Vorgaben hinsichtlich Entropieunterschied und Temperaturabhängigkeit erfüllt werden, so dass thermochemische Speicher bei Anwendungstemperaturen < 450°C,

insbesondere aber < 250°C, realisiert werden können. Mit anderen Worten können mit den erfindungsgemäßen Zusammensetzungen endotherme Spaltreaktionen unter 450°C, insbesondere aber unter 250°C ermöglicht werden.

Vorzugsweise werden zur Maximierung der Energiedichte des thermochemischen Speichers hochkonzentrierte Lösungen oder Dispersionen, am besten flüssige Reinkomponenten, die nicht mit einem Lösungsmittel verdünnt sind, als Komponenten HA und B eingesetzt (Bulk-Reaktion). Unter hochkonzentriert ist hierbei zu verstehen, dass der Anteil an Lösungsmitteln bezogen auf die Komponenten HA und B so gewählt wird, dass der Anteil des erfindungsgemäßen Salzes HB_A an der erfindungsgemäßen Zusammensetzung zumindest 30 Gew.-% beträgt, in der Regel wird der Anteil des Salzes sogar zumindest 40 Gew.-% betragen. Um besonders hohe Energiedichten zu realisieren, sollte der Anteil des Salzes zumindest 70 Gew.-% betragen oder - wenn dies die anderen physikalischen Parameter zulassen sogar vollständig auf ein Lösungsmittel verzichtet werden. Als niedermolekulare Reinkomponenten finden demzufolge vorzugsweise Substanzen kleiner Molmasse (insbesondere kleiner 700 g/mol, häufig kleiner 500 g/mol, beispielsweise kleiner 250 g/mol) oder polymere Strukturen mit möglichst hoher Dichte an funktionellen Gruppen (Säure bzw. Basenfunktionen) Verwendung . Ist die Säure HA oder die Base B als abzudestillierende Komponente vorgesehen, so sollten vorzugsweise die vorstehend genannten Molmassen von kleiner 250 g/mol, insbesondere 200 g/mol, gewählt werden. Bei mehrbasigen Aminen bzw. Säuren mit mehr als einer Säuregruppe kann im Einzelfall auch eine Molmasse von 700*n g/mol als obere Grenze sinnvoll sein (wobei n für die Anzahl der basischen Gruppen bzw. der Säuregruppen steht. Bei Polymeren ist die Polymermasse der Reinkomponenten HA beziehungsweise B im Regelfall kleiner als 15000 g/mol, insbesondere kleiner als 10000 g/mol und häufig sogar kleiner 8000 g/mol; die Dichte an funktionellen Gruppen wird erfindungsgemäß über die die Anzahl der für die Neutralisationsreaktion zugänglichen Gruppen pro Volumeneinheit ermittelt (also die Konzentration der titrierbaren polymeren Amin- beziehungsweise Säure-Gruppen) und ist im Regelfall größer als 1 mol/L (bezogen auf die Reinkomponenten oder in Lösung vorliegenden Komponenten HA beziehungsweise B), insbesondere größer als 5 mol/L und häufig sogar größer als 10 mol/L.

Lösungen, insbesondere Lösungen in Wasser (aber auch Lösungen in einem organischen Lösungsmittel), können dann sinnvoll sein, wenn eine Verdünnung der freien Säure oder der freien Base aus Sicherheitsaspekten sinnvoll ist (beispielsweise sind die Auflagen bei der Verwendung konzentrierter Essigsäure höher als bei verdünnter Essigsäure). Außerdem kann der Zusatz eines Lösungsmittels für die reversible endotherme Spaltungsreaktion relevant sein (beispielsweise bei azeotropen Destillationen oder Extraktionen). Schließlich kann ein Zusatz von Wasser auch die Wärmeleitfähigkeit erhöhen, was für bestimmte Anwendungen oder Reaktionssysteme von Vorteil ist. Insbesondere sind hier Systeme zu nennen, die eine deutliche niedrigere Wärmeleitfähigkeit hat. Beispielsweise beträgt die Wärmleitfähigkeit hydrophober, flüssiger Reaktionssysteme, etwa das Systems Trioctylamin und Pelargonsäure, nur ungefähr 25% der Wärmleitfähigkeit von Wasser (ca. 0,6 W/mK bei 20°C). Durch den Zusatz von Wasser kann die Wärmeleitfähigkeit daher problemlos erhöht werden.

Gemäß einer Ausführungsform können über die Struktur bzw. geeignete Wahl der Reaktionspartner (d.h. die zum Salz der erfindungsgemäßen Zusammensetzung korrespondierenden freien Säure und freien Base) pumpbare Wärmespeichermedien verwirklicht werden. Diese lassen sich insbesondere mithilfe thermischer Trennverfahren (z.B. Destillation, Extraktion oder Membranverfahren, wie Pervaporation und Ultrafiltration) aber auch mechanisch oder elektrisch (beispielsweise mit Elektrodialyse) leicht auftrennen:

$$\mathrm{HB_A\ (l)} + \Delta\mathrm{HR} \leftrightarrow \mathrm{B\ (l)} + \mathrm{HA(l)}$$

$$\downarrow \text{ z.B. Abdestillieren von HA}$$

$$\mathrm{HA(g)}$$

Unter pumpbar wird erfindungsgemäß insbesondere verstanden, dass das Reaktionssystem, d.h. die Edukte, vor allem aber die durch die Säure-Base-Reaktion erhaltene Zusammensetzung eine kinematische Viskosität (ermittelt durch Bestimmung der dynamischen Viskosität mittels eines Schubspannungsrheometers und Division des erhaltenen Werts durch die Dichte der Zusammensetzung) von maximal $600 * 10^{-6}$ $m^2/s$, insbesondere von maximal $150 * 10^{-6}$ $m^2/s$ besitzt. Diese Werte beziehen sich auf Raumtemperatur (25 °C).

Pumpbare Zusammensetzungen gestatten es für Wärmespeicher eine besonders kostengünstige Verfahrenstechnik anzuwenden, wie sie die Systeme nach dem Stand der Technik nicht erlauben, und sind insbesondere bei Langzeitwärmespeicherungssystemen vorteilhaft.

Erfindungsgemäß wurde insbesondere erkannt, dass ein pumpbares, thermisch trennbares Reaktionssystem erhalten wird, wenn die Neutralisation von organischen Stickstoffbasen und Säuren zu nichtflüchtigen Salzstrukturen (HB_A bzw. $HB^+ + A^-$) - sogenannten ionischen Flüssigkeiten - führt. Aufgrund ihrer spezifischen Materialeigenschaften haben ionische Flüssigkeiten zwar als Wärmeträgermedien in Speichern, nicht aber als thermochemisches Reaktionssystem Einsatz gefunden.

Pumpbare Medien können auch - müssen aber nicht - unter Verwendung eines Lösemittels, beispielsweise

eines organischen Lösungsmittels oder Wasser, erzielt werden.

Gemäß einer weiteren Ausführungsform kann die dem Salz der erfindungsgemäßen Zusammensetzung zugrundeliegende freie Base flüssig oder gasförmig sein oder als ein in einem Lösungsmittel gelöstes Polymer vorliegen. Alternativ oder gleichzeitig kann auch die dem Salz zugrundeliegende freie Säure flüssig oder gasförmig sein oder als ein in einem Lösungsmittel gelöstes Polymer vorliegen. Häufig wird nur entweder die freie Base oder die freie Säure ein Polymer sein. Diese Ausführungsform ist insbesondere bei den Ausführungsformen vorteilhaft, bei denen das Trennverfahren eine Destillation ist.

Wird einer der Reaktionspartner (also freie Säure oder freie Base) als polymere Struktur eingesetzt, so lässt sich der korrespondierende Reaktionspartner besonders leicht hiervon abtrennen. Neben der Trennung durch Destillation, Extraktion, Pervaporation oder Ultrafiltration lassen sich bestimmte Säuren wie Propion-, Butter- oder iso-Buttersäure lassen sich als azeotrope Mischung abdestillieren - der Umgang mit reinen Säuren, hochätzenden Stoffen (Korrosion) kann somit vermieden werden.

Weisen die Reaktanden eine makromolekulare Struktur auf, so erfolgt die Neutralisation über eine polymeranaloge Reaktion oder Simplexbildung.

Erfindungsgemäß wurde also erkannt, dass auch makromolekulare Basen oder Säuren für Neutralisationsreaktionen eingesetzt werden können, um thermochemische Wärmespeichermaterialien mit maßgeschneiderten Eigenschaften herzustellen. Die Neutralisation von Makromolekülen ist ansonsten lediglich für Anwendungen wie die Herstellung wasserlöslicher Produkte bekannt.

Gemäß einer Ausführungsform erfolgt die thermoreversible Neutralisationsreaktion zwischen organischen Stickstoffbasen und Säuren. Denkbar ist aber auch der Einsatz von Phenolen bzw. Phenolaten als Säure- oder Basenkomponente. Hierbei kann die organische Stickstoffbase ein tertiäres Amin, ein Guanidin, ein Amidin oder ein stickstoffhaltiger Heterocyclus sein oder als Polymer diese funktionellen Gruppen enthalten. Primäre oder sekundäre Amine sind im Allgemeinen ungeeignet, da sie mit Carbonsäuren in einer irreversiblen Nebenreaktion zu Amiden reagieren. Ist der organische Rest eines sekundären Amins sterisch anspruchsvoll, z.B. ein Isopropyl- oder. tert-Butyl-Rest, so ist die Gefahr der Amidbildung allerdings gering. Auch bei polymeren mit Amingruppen trifft die vorstehende Aussage zu primären und sekundären Aminen häufig nicht zu. Neben einwertigen Stickstoffbasen können auch mehrwertige Stickstoffbasen, wie Bisamine und Hexahydro-Triazine, eingesetzt werden. Bisamine wie Bis(dimethylamino)methan oder Bis(dimethylamino)ethan sind leicht abdestillierbare Basen.

Obwohl eine Vielzahl von Stoffgruppen für Neutralisationsreaktionen genutzt werden können, ist die thermoreversible Kontrolle von Säure-Base-Kombinationen oft schwierig. Vorzugsweise sollten die ausgewählten Komponenten und resultierenden Produkte nicht toxisch bzw. korrosiv sein und am besten auch kostengünstig herzustellen sein. Unter diesen Voraussetzungen sind im avisierten Niedertemperaturbereich < 250 °C besonders Neutralisationen mit organischen Stickstoffbasen und Säuren geeignete Kombinationen. Die organischen Stickstoffbasen sind im Allgemeinen in großem Maße und in großer Vielfalt kommerziell verfügbar.

Die Eigenschaften der Wärmespeichermaterialien - speziell Parameter wie der Schmelzpunkt, Siedepunkt der Edukte und Produkte - lassen sich dann über die chemische und molekulare Struktur der organischen Stickstoffbase und Säure flexibel einstellen, so dass ein pumpbares Reaktionssystem erhalten werden kann, welches durch thermische Trennverfahren wieder in die Reaktanden HA und B aufgetrennt werden kann. Dies ist im Regelfall im bevorzugten Anwendungsbereich unter 250°C realisierbar. Der Grund hierfür ist, dass die organischen Stickstoffbasen zur thermoreversiblen Neutralisation von Säuren die Vorgaben hinsichtlich Entropieunterschied und Temperaturabhängigkeit besonders gut erfüllen können.

Gemäß einer weiteren Ausführungsform ist die freie organische Säure (im Fall einer nicht-polymeren Säure) eine Mono-Carbonsäure, eine Mono-Sulfonsäure oder ein Phenol bzw. ein Phenolderivat. Derartige Säuren haben sich für die thermoreversible Reaktion als besonders langzeitstabil und vorteilhaft erwiesen. Besonders hervorzuheben sind (auch aufgrund ihrer besseren Flüchtigkeit) Alkylcarbonsäuren sowie natürlich vorkommende organische Säuren, insbesondere Carbonsäuren, ausgewählt aus Milchsäure, Bernsteinäure, Essigäure, Weinsäure, Äpfelsäure, Glutarsäure, oder hierzu korrespondierende Derivate, bei denen die Alkohol-Gruppe verestert oder verethert ist (um beispielsweise eine Polymerisation bei Milchsäure oder Weinsäure auszuschließen), und Mischungen hieraus, Grundsätzlich kommen aber auch andere Säuren, wie C-H-acide Verbindungen, saure Alkohole (beispielsweise β-Keto-Alkohole) sowie saure Schwefelsäureester (z.B. mit Monoalkylsulfaten korrespondierende Säuren), saure Phosphorsäureester, d.h. Phosphorsäure Mono- oder Diester und dergleichen in Betracht. Insbesondere wenn bereits die freie organische Base mittels Destillation abgetrennt wird, können auch zwei- oder mehrwertige organische Säuren eingesetzt werden.

Gemäß einer weiteren Ausführungsform ist die organische Säure oder die organische Base im Zug der endothermen Spaltungsreaktion entweder als Reinsubstanz oder mit dem gegebenenfalls vorhandenen Lösungsmittel mittels einer Destillation, insbesondere einer azeotropen Destillation abdestillierbar. Die destillative Trennung erlaubt eine besonders einfache Umsetzung der erfindungsgemäßen Wärmespeicherung. Daneben oder zusätzlich kommen als Trennungsverfahren insbesondere Extraktion und/oder Membranverfahren und elektrische Verfahren wie die Elektrodialyse in Betracht.

Gemäß einer weiteren Ausführungsform erfolgt das Trennverfahren, insbesondere, wenn es sich um eine Destillation handelt bei einem Druck von bis zu 20000 hPa, insbesondere bei einem Druck von 2 bis 2000 hPa. Drücke die größer als der Umgebungsdruck werden im Regelfall nur dann benötigt, wenn Säure, Base oder Salz bei Umgebungsdruck in den Prozessschritten der Wärmeabgabe oder der Lagerung gasförmig werden oder wenn bei der Aufladung des thermochemischen Speichers eine Membrantrennung durchgeführt wird, deren Triebkraft eine Druckdifferenz ist. Häufig wird daher ein Druck von 20 hPa bis Normaldruck (ca. 1000 hPa) vorliegen.

Gemäß einer weiteren Ausführungsform kann die erfindungsgemäß verwendete Zusammensetzung das Salz aus organischer Säure und organischer Base, einen Prozesshilfsstoff und gegebenenfalls das Lösungsmittel umfassen oder aus diesen Komponenten bestehen. Als Prozesshilfsmittel beziehungsweise Prozesshilfsstoffe kommen eine oder mehrere der nachfolgenden Stoffe in Betracht: Korrosionsinhibitoren, Polymerisationsverhinderer, Schleppermedien, Viskositätsmodifizierer ("Viskomodifier"), Antioxidantien, Emulgatoren, Dispersionsstabilisatoren und Wärmeübergangsmodifikatoren. Hiermit können die für den spezifischen Anwendungsfall erforderlichen Materialeigenschaften (Wärmeleitfähigkeit, Viskosität, Alterung, etc.) optimal angepasst und verbessert werden.

Gemäß einer weiteren Ausführungsform beträgt der Gewichtsanteil der Prozesshilfsstoffe maximal 10 Gew.-%.

Die vorliegende Erfindung betrifft auch ein Verfahren zur thermochemischen Wärmespeicherung. Hierbei wird die vorstehend näher erläuterte Zusammensetzung unter Zufuhr von Wärme einer endothermen Spaltungsreaktion unterworfen, wobei aus dem Salz aus der organischen Base und der organischen Säure zumindest teilweise die freie organische Säure und die freie organische Base gebildet werden. Die ursprünglich vorliegende Zusammensetzung wird also in einen Zustand gebracht, in dem die freie organische Säure und die freie organische Base nebeneinander vorliegen, sodass sie voneinander getrennt werden können.

Die Trennung von freier organischer Säure und die freier organischer Base ist nicht grundsätzlich erforderlich im Regelfall wird man sie aber durchführen; für Kurzzeitwärmespeicherung ist aber schon das Erreichen eines höherenergetischen Zustands ausreichend und nicht unbedingt eine Trennung erforderlich. Eine Verschiebung des Gleichgewichtes Richtung freier Säure und freier Base innerhalb des Gemisches ist hierbei ausreichend, ohne dass die beiden Komponenten voneinander separiert werden müssten. Es kann also die Temperaturabhängigkeit des Protonierungsgrades der Base genutzt werden, wie zum Beispiel bei der Stoffkombination aus Tripentylamin und Pelargonsäure. Wird der Wärmespeicher als Temperaturpuffer eingesetzt, um einen kurzzeitig auftretenden Temperaturanstieg zu reduzieren, kann es ausreichen, dass die kurzzeitig freigesetzte Wärme durch die endotherme Spaltung in freie Säure und Base aufgenommen wird. Wird die Wärme wieder freigesetzt, sinkt die Gemischtemperatur im weiteren zeitlichen Verlauf langsam wieder ab, wobei sich das Gleichgewicht wieder auf die Seite des Produktes verschiebt. Die verfahrenstechnischen Schritte und Apparate zur Abtrennung einer Komponente können dann entfallen. Im einfachsten Fall muss nur ein gekapseltes, ausreichend groß dimensioniertes Flüssigkeitsvolumen vorhanden sein. Denkbar ist ein derartiges System beispielsweise zur Begrenzung der Temperatur in Hochfrequenz-Verstärkern auf maximal 100 bis 150 °C.

Die zugeführte Wärme kann insbesondere Abwärme sein, aber auch solare Wärme oder Wärme aus alternativen Formen wie z.B. durch Mikrowellen oder Ultraschall eingebrachte Wärme. Die erfindungsgemäßen Zusammensetzungen können daher beispielsweise auch in Wärme-Kraftkopplungs -bzw. Kraft-Wärmekopplungsanlagen und Wärmepumpen Verwendung finden.

Die vorliegende Erfindung betrifft schließlich auch eine Vorrichtung zur Durchführung des vorstehend beschriebenen Verfahrens zur thermochemischen Wärmespeicherung. Diese Vorrichtung umfasst einen Vorratsbehälter für die Zusammensetzung zur thermochemischen Wärmespeicherung, einen Behälter für die freie organische Base und einen Behälter für die freie organische Säure, einen Reaktor zur Durchführung der endothermen Spaltungsreaktion und eine Separationseinrichtung zur Trennung von freier organische Base und freier organischer Säure. Im Fall einer polymeren freien organische Säure ist der Vorratsbehälter hierfür nicht unbedingt erforderlich; für eine polymeren freien organische Base gilt entsprechendes. Es versteht sich von selbst, dass die freie organische Base und die freie organische Säure unabhängig voneinander jeweils auch in gelöster Form vorliegen können; auch kann ein eigener Vorratsbehälter für ein Lösungsmittel vorhanden sein.

Gemäß einer Ausführungsform kann die Vorrichtung zusätzlich einen Reaktor zur Durchführung der exothermen Reaktion zwischen organischer Säure und organischer Base enthalten, mittels dem die gespeicherte Wärme wieder freigesetzt werden kann.

Zusammenfassend ist festzustellen, dass die vorliegende Erfindung erstmals die Verwendung von organischen Materialien zur thermochemischen Wärmespeicherung mittels einer thermoreversiblen, chemischen Gleichgewichtsreaktion für Anwendungstemperaturen kleiner 450°C lehrt. Als Basis dient die Neutralisationsreaktion von zwei Komponenten HA und B, wobei HA eine Säure und B eine organische Base, insbesondere eine N-haltige Base ist. Zusätzlich vorteilhaft ist unabhängig voneinander das Vorliegen eines oder mehrerer der nachfolgenden Aspekte, nämlich, dass:

- ein reaktives Stoffsystem, welches bei Anwendungstemperaturen unterhalb 450°C bzw. bevorzugt unterhalb von 250°C, als pumpbares Medium vorliegt (also als Bulk (bzw. Schmelze), als Lösung und/oder als Dispersion).

- die thermochemische Wärmespeicherung als langzeitstabile Speicherung möglich ist, z.B. für die Speicherung von (Ab-)Wärmen und die Rückreaktion (temperaturinduziert) und verfahrenstechnische Auftrennung der Gemischkomponenten HA und B. Die Gemischkomponenten HA und B werden während der Ladereaktion im Regelfall über verfahrenstechnische Schritte räumlich voneinander getrennt; beispielsweise durch Destillation, Extraktion und/oder Membranverfahren. Durch das Zusammenführen der Komponenten kann die aufgenommene Wärme wieder freigesetzt werden.

- zusätzlich ein Einsatz von Prozesshilfsstoffen wie Lösemittel, Emulgatoren, Dispersionsstabilisatoren, Antioxidantien, Wärmeübergangs- und/oder Viskositätsmodifikatoren, etc. erfolgt, um die Materialeigenschaften des fluiden Speichermediums an die gegebenen Anwendungserfordernisse (Pumpfähigkeit, Wärmeübergang, Leistungsdichte, usw.) anpassen zu können.

Erfindungsgemäß wurde insbesondere auch Folgendes erkannt:

Die energietechnische Nutzung thermoreversibler Neutralisationsreaktionen organischer Basen, insbesondere Stickstoffbasen, mit Säuren ermöglicht die thermochemische Wärmespeicherung, wobei sich die Eigenschaften der Speichermedien variabel über die Topologie, chemische Struktur und/oder Makrostruktur bzw. übergeordnete Strukturebenen (z.B. Sekundärstruktur) der Reaktionskomponenten einstellen lassen. Das gilt im Besonderen für ihren Einsatz im Nieder- und Mitteltemperaturbereich (< 250°C), wo nach dem Stand der Technik keine Applikationslösungen für eine derartige thermochemische Speicherung vorliegen.

Viele Speichermedien erfordern zur Einbindung in ein gesamtes Energieversorgungssystem eine komplexe und kostspielige Verfahrenstechnik, da die Materialien schlecht oder gar nicht pumpfähig sind. Ein schlechter Wärmeübergang vom bzw. zum Wärmespeichermaterial führt ferner zu geringen Leistungsdichten. Die dringend erforderliche Anpassung der Materialeigenschaften ist daher mit herkömmlichen Speichermedien nach dem Stand der Technik nur schwer und kostenintensiv erreichbar.

Thermochemische Wärmespeichermaterialien auf Basis organischer Reaktionssysteme sind anpassungsfähiger und dadurch unproblematischer in umweltverträgliche Applikationslösungen zu überführen. Im Vergleich zu anorganischen Basen und Säuren, sind organische Komponenten im Allgemeinen nicht oder zumindest deutlich weniger korrosiv. Die Sicherheitsanforderungen in der Anwendung sind somit deutlich niedrigerdas spart Investitionskosten und erweitert das mögliche Anwendungsfeld, z.B. auch für nichtindustrielle Applikationen.

Eine Anpassung der erfindungsgemäß beschriebenen Systeme kann u.a. durch die zusätzliche Verwendung von Prozessadditiven erfolgen. Diese erlauben, dass die Neutralisationsreaktionen unter variablen Verfahrensbedingungen - d.h. in Substanz, Lösung oder Heterophase - erfolgen können und können daneben die Pumpbarkeit verbessern oder auch erst gewährleisten. Demzufolge können erfindungsgemäß sowohl flüssige und gasförmige Reaktionspartner als auch flüssige und feste Produkte in Form von Dispersionen als thermochemische Wärmespeichermaterialien auf organischer Basis eingesetzt bzw. erhalten werden.

Das beschriebene Reaktionssystem bietet den Vorteil durch die Trennung der Reaktanden (Ladevorgang) langzeitstabile und pumpbare Wärmespeichersysteme realisieren zu können. Selbst bei Neutralisationen, die zu niedrigen Energiedichten führen sind diese damit pumpbaren Latentspeichern oder sensiblen Speichern überlegen.

Wie erwähnt sind im Mittel- und Niedertemperaturbereich Speicher mit Speicherdichten von ca. 125 bis 250 $kWh/m^3$ verfügbar. Durch die erfindungsgemäße Verwendung von thermochemischen Wärmespeichermaterialien lassen sich die spezifischen Energiedichten im avisierten Temperaturbereich in vielen Fällen auf 500 $kWh/m^3$ verdoppeln.

Die vorliegende Erfindung wird nachfolgend ohne Einschränkung der Allgemeinheit noch näher anhand von Ausführungsbeispielen und Figuren beschrieben.

Es zeigen:

Figur 1: Die Speicherdichten von verschiedenen Energiespeichermethoden in Abhängigkeit ihrer spezifischen thermischen Anwendungsbereiche.

Figur 2: Eine Apparatur zur Messung von Wärmespeicherdichten

Figur 3: Thermische Effekte verschiedener Amine bei äquimolarer Mischung mit Essigsäure

Figur 4: Den Vergleich der Wärmeeffekte verschiedener Stoffsysteme

Figur 5a/b: Thermogramm zweier Neutralisationsreaktionen

Figur 6 Verfahrensschema zur Nutzung thermoreversibler Neutralisationsreaktionen zur thermochemischen Speicherung

Beispiel 1: Kalorimetrische Bestimmung der freiwerdenden Wärmemenge bei der Vermischung von Trioctylamin und Essigsäure

Die Durchmischungsversuche von Trioctylamin und Essigsäure wurden in einem Reaktionskalorimeter RC1 der Fa. Mettler-Toledo durchgeführt. Das in der Säure-Base-Reaktion entstehende Salz Trioctylammoniumacetat war, ebenso wie die Edukte, flüssig.

Im 2-Liter-Reaktor des Kalorimeters wurden 716 g bzw. 895 mL Trioctylamin (Alamine 300, BASF) vorgelegt. Bei einem Trioctylamingehalt von etwa 95 % ergab sich eine Aminstoffmenge von 1,92 mol.

Unter Rühren wurde der Reaktorinhalt auf 20 °C temperiert und isotherm auf dieser Temperatur gehalten. Anschließend wurden, ebenfalls unter Rühren, 480 g bzw. 459 mL der Essigsäure (7,99 mol) innerhalb von einer Stunde zudosiert. Diese Menge, die etwa zwei Dritteln der Aminmasse oder 4,16 Stoffmengenäquivalenten entsprach, erwies sich in vorhergehenden Versuchen als ausreichend, um alle mit dieser Apparatur messbaren Wärmeeffekte vollständig abzubilden.

Über die Temperaturregelung des Thermofluids im Reaktormantel, konnte die Temperatur im Reaktor während der Zudosierung auf 21 °C gehalten werden. Aus der Temperaturdifferenz zwischen Stoffgemisch im Reaktor und Reaktormantel konnte der Wärmestrom durch die Reaktorwand zum jeweiligen Versuchszeitpunkt bestimmt werden. Unter Berücksichtigung aller weiteren Wärmeströme, wie zum Beispiel Wärmeverluste durch den Reaktordeckel oder den Wärmeeintrag durch die zudosierte Essigsäure, ließ sich daraus jener Wärmestrom berechnen, welcher aus der Durchmischung beider Stoffe resultierte. In einer Auftragung dieses Mischungswärmestroms (oder Reaktionswärmestroms) gegen die Zeit, ergibt sich die, bei der Durchmischung freiwerdende, Gesamtwärmemenge (Mischungs- und Reaktionsenthalpie) als Inhalt der Fläche unterhalb der Wärmestromkurve bis zur Basislinie.

Bei der hier beschriebenen Mischung aus Essigsäure und Trioctylamin ergibt sich eine Wärmemenge von 93 kJ. Bezogen auf die Gesamtmasse ergibt sich damit eine Änderung der spezifischen Enthalpie $\Delta H_R$ von 78 kJ/kg. Letzterer Wert könnte durch den Einsatz eines höheren Massenverhältnisses von Amin zu Essigsäure noch gesteigert werden. Wird davon ausgegangen, dass die reine Mischungsenthalpie gegenüber der Reaktionsenthalpie vernachlässigbar klein ist und wird zudem von einem vollständigen Umsatz des Amins ausgegangen, ergibt sich eine molare Reaktionsenthalpie $\Delta h_R$ von 48 kJ/mol. Die Bilanzierung der Wärmeströme und die weiteren Auswertungen erfolgten gemäß der Bedienungsanleitung des Kalorimeters bzw. nach Riesen (1987, Bilanz-Reaktionskalorimetrie, Thermochimica Acta 119: 219-222) und unter Zuhilfenahme der Auswertesoftware von Mettler Toledo.

Beispiel 2: Kalorimetrische Bestimmung der destillativen Trennung von Essigsäure und Trioctylamin aus einem Gemisch aus Trioctylammoniumacetat und Essigsäure

Das Gemisch aus Trioctylammoniumacetat und Essigsäure aus Beispiel 1 wurde im Reaktionskalorimeter belassen und im Destillationsmodus aufgeheizt. Hierbei wird der Reaktorinhalt über den Reaktormantel aufgeheizt, wobei die Temperaturregulierung verhindert, dass die Temperaturdifferenz zwischen Mantel und Reaktorinhalt einen vorher festgelegten Wert überschreitet. Diese Temperaturdifferenz wurde, auf Basis vorhergehender Versuche, auf 5 K festgelegt. Um die Trennung bei möglichst niedriger Temperatur durchführen zu können, wurde der Druck in der Apparatur auf 60 mbar abgesenkt.

Ab einer Temperatur von 84,5 °C innerhalb des Reaktors, beginnt das Gemisch zu sieden. Die im Kopf des Destillationsaufsatzes gemessene Siedetemperatur der Essigsäure beträgt 45 °C. Durch die zunehmende Entfernung der Essigsäure, muss das Reaktionsgleichgewicht durch immer höhere Temperaturen auf die Seite der freien Säure bzw. freien Base verschoben werden. Ab etwa 110 °C steigt die Reaktortemperatur zunehmend schneller an, während gleichzeitig die Siedetemperatur im Kopf der Destillationsapparatur abnimmt. Der Aufheizvorgang wurde auf eine Manteltemperatur von 150 °C begrenzt. Anschließendes Auswiegen ergab 481 g Essigsäure und 715 g Trioctylamin - diese Werte entsprechen sehr gut den ursprünglichen Einwaagen (480 g Essigsäure bzw. 716 g Trioctylamin). IR-Messungen zeigen minimale gegenseitige Verunreinigungen der Substanzen. Die Trennung ist somit vollständig.

Für die Bestimmung des Wärmestroms der aus der chemischen Reaktion, sowie der Stofftrennung resultiert, muss der für die Verdampfung benötigte Wärmestrom, neben den in Beispiel 1 genannten Strömen, berücksichtigt werden. Dieser kann mit umgekehrten Vorzeichen bei der Kondensation im Kühler über die Temperaturdifferenz des Kühlwassers bestimmt werden.

Die gemessene Enthalpieänderung bezogen auf eine Temperatur von 20 °C ergab sich zu - 92,5 kJ. Damit musste für die Trennung der Stoffe netto jene Energiemenge zugeführt werden, die bei der Mischung der Stoffe zuvor (Beispiel 1) freigeworden war, das System ist somit vollständig reversibel.

Eine Überprüfung der mit Kalorimeter bestimmten Reaktionswärmen $\Delta H_R$ und spezifischen Wärmekapazität $C_P$ erfolgte über die Bestimmung der thermisch nicht reversiblen Neutralisation einer 1 M wässrigen Natronlauge mit 1 M Salzsäure. Die Reaktion und ihre thermodynamischen Daten sind hinreichend literaturbekannt. Die Werte sind zum Vergleich mit den ermittelten Werten aus Beispiel 1 und 2 in der Tabelle 1 aufgelistet.

Tabelle 1: Vergleich aus der Literatur bekannter und experimentell ermittelter Größen $\Delta H_R$ und $C_P$

| | Titration (Entladen) | | | Destillation (Aufladen) | | | |
|---|---|---|---|---|---|---|---|
| Mischung | $\Delta h_R$ in kJ/mol (a) | $\Delta h_R$ in kJ/mol (l) | $\Delta H_R$ in kJ/kg | $\Delta$hR in kJ/mol (a) | $\Delta H_R$ in kJ/kg | Cp in J/(g*K) (a) | Cp in J/(g*K) (l) |
| Essigsäure + Trioctylamin | -45,9 | | -77,7 | 45,7 | 77,3 | 2,13<br>2,09* | |
| 1M NaOH + 1 M Salzsäure | -57,8 | -55,7 | -28,1 | | | 3,859<br>4,078* | 3,924 |
| *Doppelbestimmung<br>(a) anmeldungsgemäß<br>(l) gemäß Literatur | | | | | | | |

Beispiel 3: Vergleich der Wärmespeicherdichten verschiedener Säure-Base-Kombinationen mit Hilfe einer vereinfachten Messapparatur

Für ein Screening verschiedener Säure-Base-Systeme wurde eine Reihe von Stoffen ausgewählt (siehe Tabellen 2 bis 4). Die Auswahl der Substanzen erfolgte nach folgenden Gesichtspunkten:

- zu erwartende Bildung eines flüssigen Produktes (ionische Flüssigkeit)
- höhersiedende bzw. nicht flüchtige Aminstrukturen in Kombination mit Säuren, die sich potenziell aus dem Gemisch thermisch abtrennen lassen
- Einsatz von Säuren bzw. Basen mit unterschiedlichen Säure- bzw. Basenstärken (pKS-Werte)
- Verwendung niedermolekularer und polymerer Aminstrukturen

Tabelle 2: Auswahl von Säuren

| | Essigsäure | Ameisensäure | Trifluoressigsäure | Methansulfonsäure | |
|---|---|---|---|---|---|
| $pK_S$ (25°C) | 4,756 | 3,75 | 0,52 | -1,9 | |
| Siedepunkt [°C] | 118 | 107 | 73 | 167 | |
| Dichte [g/mL] | 1,045 | 1,220 | 1,488 | 1,481 | |
| M [g/mol] | 60,053 | 46,026 | 114,02 | 96,11 | |
| molares Volumen [mL/mol] | 57,5 | 37,7 | 76,6 | 64,9 | |
| Hersteller | AppliChem | Roth | AppliChem | Merck | |
| assay [%] | -100 | 98 | 99 | 99 | |
| | | | | | |
| | 3-Butensäure | Pelargonsäure | Brenztraubensäure | Milchsäure | Weinsäure |
| $pK_S$ (25°C) | 4,34 | 4,96 | 2,39 | 3,86 | 2,95/4,25 |
| Siedepunkt [°C] | 162-163 | 268-269 | 165 | 122 | Smp. 172 |
| Dichte [g/mL] | 1,012 | 0,905 | 1,256 | 1,21 | |
| M [g/mol] | 86,09 | 158,24 | 88,063 | 90,079 | 150,09 |
| molares Volumen [mL/mol] | 85,1 | 174,9 | 70,1 | 74,4 | |
| Hersteller | Alfa Aesar | Alfa Aesar | AppliChem | Roth | Sigma-Aldrich |
| assay [%] | 96 | 97 | 98,5 | 90 | ~100 |

Tabelle 3: Ausgewählte monofunktionelle Amine

| | Trioctylamin | Tridodecylamin | Trihexylamin | | Tripentylamin |
|---|---|---|---|---|---|
| Siedepunkt[°C] | 379 | 220 | 261,7 | 242,5 | |
| Dichte [g/mL] | 0,800 | 0,800 | 0,798 | 0,782 | |
| M [g/mol] | 353,68 | 522,00 | 269,52 | 227,43 | |
| molares Volumen [mL/mol] | 440,8 | 652,5 | 212,4 | 290,8 | |
| Hersteller | BASF (Alamine 300) | BASF(Alamin e 304-1) | Alfa Aesar | Aldrich | |
| assay [%] | 93 | 95 | 97 | 98 | |
| | | | | | |
| | Triethylamin | N,N,N',N'-Tetramethyldiaminomethan | 1,1,3,3-Tetramethylguanidin | | 1-Methyl-imidazol |
| Siedepunkt[°C] | 88,8 | 85 | 162 | | 198 |
| Dichte [g/mL] | 0,728 | 0,749 | 0,918 | | 1,035 |
| M [g/mol] | 101,19 | 102,18 | 114,18 | | 82,105 |
| molares Volumen [mL/mol] | 139,00 | 68,21 | 124,4 | | 79,3 |
| Hersteller | Merck | Sigma-Aldrich | Alfa Aesar | | Merck |
| assay [%] | 99 | ~100 | 99 | | 99 |

Tabelle 4: Ausgewählte polymere Amine

| | Hercobond 6363 | Lupamin 1595 | Lupasol G100 | PEI niedermolekular 50 %ige Lösung |
|---|---|---|---|---|
| Polymertyp | hydrolysiertes | Polyvinylamid | Polyethylenimin | (PEI) |
| massengemitteltes Molekulargewicht [g/mol] | 238000 | nicht bekannt | 6200 | 800 |
| Massenanteil Polymere [%] | 15 | 20 | 50 | 50 |
| Hydrolysegrad [%] | 95 | 100 | -- | -- |
| Dichte [g/mL] | 1,0940 | 1,1974 | 1,083 | 1,068 |
| molares Volumen Amingruppe [mL/mol] | 72,7 | 67,6 | 39,8 | 48,0 |
| $C_{Amingruppe}$ [mol/L] | 1,0600 | 1,477 | 9,832 | 10,231 |
| Hersteller | Ashland | BASF | BASF | Sigma-Aldrich |

Durchführung:

Die Mischungen jeweils zweier Komponenten erfolgten in 10 mL-Reaktoren einer EasyMax-Apparatur (Mettler Toledo, siehe Figur 2). Für einen Vergleich der freiwerdenden Wärmemengen, wurde die Apparatur wie ein simples Reaktionskalorimeter bei isoperiboler Fahrweise betrieben. Dazu wurde der Reaktormantel (zwischen Reaktorhalter 5 und Peltierelement 4 angeordnet) über die Peltierelemente 4 konstant auf 15 °C temperiert. Die Volumina der äquimolar eingesetzten Edukte ergaben in Summe jeweils genau 9 mL, wodurch die Wärmeaustauschfläche zwischen dem Reaktor 1 und dem Reaktorhalter 5 bzw. dem Reaktormantel in allen Versuchen etwa gleich war. Bei den Vermischungen eintretende Volumenänderungen wurden jedoch nicht berücksichtigt.

Vor der Durchmischung wurden beide Edukte jeweils in 10 mL Reaktoren eingewogen und in den gleichen Reaktorhalter gestellt (die Reaktorhalter besaßen jeweils vier Stellplätze). Einer der Reaktoren, für gewöhnlich jener der die Base enthielt, wurde mit einem Rührfisch 3 und einem Temperaturfühler 6 für die Temperatur Tr des Reaktorinhalts, vorliegend einem Pt-100-Temperaturfühler, versehen, der mindestens bis zur Herstellermarkierung in das Edukt eintauchte. Der Reaktorhalter 5 wurde bei einer Manteltemperatur von 15 °C in der EasyMax-Apparatur platziert und der Rührer eingeschaltet. Nachdem die Temperatur Tr innerhalb des einen Reaktors einen konstanten Wert angenommen hatte, wurde der Inhalt des anderen Reaktors möglichst schnell zugegeben. Durch die Mischungswärme, sowie die exotherme Säure-Base-Reaktion stieg die Temperatur im Reaktor augenblicklich an, während der Mantel ausreichend schnell reguliert wurde, um die mittels eines Temperaturfühlers 2 gemessene Reaktormanteltemperatur Tj konstant auf 15 °C zu halten.

Die Temperaturen Tj und Tr wurden für den Verlauf des Versuches aufgezeichnet, bis die Temperatur Tr des Reaktorinhalts erneut einen konstanten Wert annahm.

Es wurde davon ausgegangen, dass die im Reaktor gebildete Wärme in erster Linie über den Reaktorhalter und anschließend über den Mantel abgeleitet und nur ein geringer Anteil über die restliche Umgebung abgegeben wurde. Der zur Temperaturdifferenz Tr-Tj proportionale Wärmestrom (bzw. zu Tr proportionale Wärmestrom, da Tj konstant ist) durch Reaktorhalter und Reaktormantel wurde gegen die Zeit aufgetragen.

In Figur 3 sind die Gemischtemperaturen Tr für einige Beispielsysteme gegen die Reaktionszeit aufgetragen. Integrationen dieser Kurven bis zur jeweiligen Basislinie ergaben ein grobes Maß für die Wärmemengen, welche bei den Durchmischungen freigesetzt wurden. Figur 3 zeigt die, auf das jeweilige Gesamtvolumen von 9 mL bezogenen, Werte der Peakflächen aller Stoffkombinationen. Bei äquimolaren Stoffmengen der Reaktionspartner sollten die volumenbezogenen Wärmemengen die aus der Säure-Base-Reaktion resultieren in erster Linie von den $pK_S$-Werten der Reaktionspartner, sowie deren Molvolumina abhängen. Bei den Säuren ist der thermische Effekt umso größer, je niedriger der $pK_S$-Wert liegt. Konkret zeigt Figur 3 die thermischen Effekte verschiedener Amine bei äquimolarer Mischung mit Essigsäure; bei Tetramethylguanidin (oberste Kurve) beobachtet man zusätzlich eine Kristallisation (2. Peak); es entsteht ein festes Produkt. Bei den drei anderen Aminen ist nur ein Peak vorhanden. Beim Einsatz als Wärmespeichermaterial werden gebildete Salze, die bei Raumtemperatur fest sind, im Regelfall in einem Lösungsmittel gelöst oder suspendiert. Das Lösungsmittel kann auch einer der beiden Reaktanten sein, welcher im Überschuss zugegeben wird. Im Einzelfall ist keine Lösung oder Suspendierung erforderlich, wenn das Salz bei einer Temperatur von bis zu 100 °C schmilzt.

Die molaren Volumina liegen dabei in ähnlichen Größenordnungen, abgesehen von Ameisensäure mit besonders niedrigem und Pelargonsäure mit besonders hohem molaren Volumen (siehe Tabelle 2). Essigsäure, Bestandteil des Referenzsystems, führt im Allgemeinen zu geringfügig stärkerer Wärmeentwicklung, als 3-Buten- oder Pelargonsäure und zu geringeren Effekten als die weiteren Vergleichssäuren.

Bei den eingesetzten Aminen zeigt sich der Einfluss des molaren Volumens deutlicher. Bei annähernd gleichen pKS-Werten zeigen die Trialkylamine vom Tridodecylamin zum Tripentylamin bei abnehmendem molarem Volumen eine Zunahme des thermischen Effektes. Tetramethylguanidin ist eine besonders starke organische Base und führt neben einer starken Wärmeentwicklung oft zu (unerwünschten) festen Produkten.

Figur 4 zeigt den Vergleich der Wärmeeffekte aller betrachteten Stoffsysteme über die Peakflächen unter den Temperaturkurven (Abszisse: Peakfläche pro Volumeneinheit [K*s/mL]). Hierbei zeigen die Säulen für die 8 Säuren jeweils von links nach rechts die Werte für folgende Amine: Tridodecylamin (linkeste Säule), Trioctylamin/Tridecylamin 2:1, Trioctylamin, Trihexylamin, Tripentylamin, Tetramethylguanidin, Methylimidazol, Hercobond 6363, Lupamin 1595, Luopasol G100, PEI low 50%. Feste Reaktionsprodukte sind besonders gekennzeichnet und beinhalten zusätzlich den thermischen Effekt der Kristallisation. Bei den polymeren Aminen kann das geringe molare Volumen zu starken Effekten führen. Zwei verschiedene wasserlösliche Polymertypen wurden getestet: Zum einen (teil-)hydrolysierte Polyvinylamide (Lupamin 1595 und Hercobond 6363), deren lineare Kohlenstoffrückgrate mit primären Amingruppen besetzt sind und zum anderen verzweigte Polyethylenimine (Lupasol G100 und PEI low), welche neben primären auch sekundäre und tertiäre Amingruppen enthalten.

Die in deutlich höheren Konzentrationen wasserlöslichen Polyethylenimine zeigen dabei eine deutlich stärkere Wärmeentwicklung als die hydrolysierten Polyvinylamide und als die meisten anderen hier verwendeten Basen.

Figur 5a zeigt das Thermogramm der Neutralisation von 1 M Natronlauge und 1 M Salzsäure im RC1-Reaktionskalorimeter der Firma Mettler Toledo; Figur 5b zeigt das Thermogramm der Neutralisation von Trioctylamin mit Essigsäure im RC1-Reaktionskalorimeter der Firma Mettler Toledo. Der Unterschied zeigt deutlich die Eignung des Systems gemäß Figur 5b; die abfallende Kurve ist ein Indiz für die Erfüllung der vorstehend definierten Kriterien.

<u>Beispiel 4: Aufladen eines thermochemischen Speichers am Beispiel der Destillation einer wässrigen Triethylammonium-Polyacrylat -Lösung</u>

In einem 100 mL Rundkolben werden 34 g einer 70 %-igen wässrigen Triethylammonium-Polyacrylat-Lösung vorgelegt. Dies entspricht einer Stoffmenge an Carboxylat- bzw. Ammoniumgruppen von 139 mmol.

In der anschließenden Destillation geht bei ca. 110 °C ein Gemisch aus Wasser und dem Amin in eine Vorlage (Wasserabscheider, beheizt) über und bildet dort zwei Phasen aus. Die vorwiegend wässrige Phase wird der Polymerlösung wieder zugeführt, während die Aminphase in der Vorlage verbleibt. Letztere enthält im Wesentlichen das zuvor im Salz gebundene Triethylamin (> 85 %). Für eine Wärmefreisetzung können die so derart aufgetrennten Reaktionskomponenten wieder vermischt werden.

<u>Beispiel 5: Aufladen eines thermochemischen Speichers am Beispiel der Aufarbeitung einer wässrigen Methyldiethanol-Ammonium-Polyacrylat-Lösung</u>

Etwa 1 L einer wässrigen Methyldiethanol-Ammonium-Polyacrylat-Lösung werden in einer auf 110°C geheizten Ultrafiltrations-Einheit (druckstabiles Stahlgefäß mit Keramikmembran 3kD) unter ca. 1.5 bar Überdruck in eine konzentrierte, wässrige Polyacrylsäure-Lösung (Gehalt > 50%) und eine wässrige Methyldiethanol-Aminlösung getrennt. Als stoffliche Grundlage für die Polyacrylat-Lösung wurde ein kommerzielles Produkt (Polystabil S312 der Fa. Ashland mit MW~ 8000 g/mol, Viskosität <1000 mPas, Polymergehalt ca. 40%) eingesetzt. Die wässrige Aminlösung wird anschließend durch Destillation aufkonzentriert (> 85%), um die Volumina für den sich anschließenden Mischungsvorgang (Entladen) minimal zu halten bzw. die dabei freigesetzte spezifische Wärmemenge zu maximieren.

<u>Beispiel 6: Aufladen eines thermochemischen Speichers am Beispiel der Destillation von Trioctylammoniumlactat</u>

In einem 100 mL Rundkolben mit Destillationsaufsatz und Rührer werden 44,4 g Trioctylammoniumlactat (0,1 mol) vorgelegt, ein Vakuum von 20 mbar angelegt und gerührt. Beim Erhitzen der Flüssigkeit auf ca. 122 °C beginnt sich diese zu zersetzen, so dass die Milchsäure in eine Vorlage überdestilliert. Die Destillationstemperatur wird auf schrittweise auf ca. 140°C erhöht, um ein vollständige Abtrennung der Milchsäure aus dem Lactat gewährleisten zu können. Aus dem Lactat werden 89 g Milchsäure (Ausbeute -99 %) erhalten.

<u>Beispiel 7: Destillative Trennung bei Anwesenheit eines Lösungsmittels</u>

Um feste Reaktanden, wie z.B. Weinsäure, in Lösung zu halten und damit die Pumpbarkeit der erfindungsgemäßen Zusammensetzung zu gewährleisten wird ein Lösungsmittel zugesetzt. Dem Fachmann ist die destillative Trennung von organischen Säuren und organischen Aminen in Anwesenheit von Lösungsmitteln bekannt. So können aus einer wässrigen Lösung von Milchsäure und Trimethylamin, bei 400 mbar bis zu einer Temperatur von 120 °C, 62 % des Amins abdestilliert werden. Ferner können aus einer wässrigen Lösung von Bernsteinsäure und Trimethylamin bei Umgebungsdruck bis zu einer Temperatur 112 °C 80 % des Amins abgetrennt werden.

Erfindungsgemäß wurde ferner das Salz aus 1,3,5-Trimethyl-1,3,5-triazin und Essigsäure in wässriger Lösung mit Essigsäure als flüchtiger Komponente, sowie die Trennung des Salzes aus Weinsäure und N,N,N',N'-Tetramethylmethandiamin in wässriger Lösung mit dem Amin als flüchtiger Komponente durchgeführt. In beiden Fällen konnten mehr als 50% der flüchtigen Komponente abgetrennt werden.

Beispiel 8: Aufladen des thermochemischen Speichermaterials Triethylammonium-Methansulfonat

Im Screening-Versuch ergab die Mischung aus Methansulfonsäure und Triethylamin eine besonders hohe Energiedichte. Ob diese Energie im Sinne eines Niedertemperaturwärmespeichers nutzbar ist, hängt davon ab, in welchem Maß das Gemisch wieder auftrennbar ist.

In diesem Beispiel wurden 23,54 g Methansulfonsäure und 24,79 g Triethylamin (jeweils 242,5 mmol) vorsichtig in einem 100 mL-Rundkolben gemischt. Der Kolben mitsamt der Mischung wurde in eine Labordestillationsapparatur mit Vakuumanschluss eingebaut. Anschließend wurde das Gemisch unter Rühren, bei 400 mbar aufgeheizt.

Nachdem auch bis 200 °C Gemischtemperatur kein Destillat im Auffangkolben sichtbar war, wurde der Druck bis auf 6 mbar abgesenkt und für 2 h bei diesen Bedingungen belassen. In einer für letztere Bedingungen erforderliche Kühlfalle wurden 1,80 g Substanz aufgefangen (7,3 % des eingesetzten Triethylamins). Ein Substanzverlust konnte ausgeschlossen werden.

Die Substanzkombination ist offenbar im Vorzugstemperaturbereich thermisch nur schwer in ausreichendem Umfang trennbar. Allerdings konnte die Mischung mittels Elektrodialyse getrennt werden (vergleiche hierzu Beispiel 10).

Beispiel 9: Mehrfaches Aufladen und Entladen von Triethylammoniumlactat

In einem 250 mL Rundkolben wurden 69,24 g Triethylamin mit 67,26 g einer 90 %igen Lösung von Milchsäure in Wasser langsam miteinander vermischt. Die gemessene Reaktionsenthalpie (DSC) betrug - 40,3 kJ/mol. Anschließend wurde der Kolben in eine Labordestillationsapparatur mit Vakuumanschluss eingebaut. Bei 400 mbar wurde das Gemisch unter Rühren langsam aufgeheizt. Ab etwa 60 °C begann Destillat überzugehen. Danach wurde die Temperatur sukzessive gesteigert, um den Destillatfluss aufrecht zu erhalten. Bei 120 °C wurde der Versuch abgebrochen, um eine vollständige Entwässerung und Polymerisation der Milchsäure zu verhindern. Bis zu diesem Zeitpunkt konnten 75 % des eingesetzten Amins destillativ abgetrennt werden.

Destillat und Destillationssumpf wurden miteinander vereint und erneut gemäß der beschriebenen Vorgehensweise destillativ voneinander getrennt. Es konnten 72 % des Amins destillativ abgetrennt werden. Nach einer dritten und einer vierten jeweils aufeinanderfolgenden Entladung und Aufladung konnten konstant 67 % des Amins destillativ abgetrennt werden.

Beispiel 10: Aufladen des thermochemischen Speichermaterials Dimethylisopropyl-ammoniumlactat durch Elektrodialyse mit bipolaren Membranen

Es wurde eine Laborelektrodialyseapparatur der Firma PC Cell verwendet, die aus einem Stack fünf gleichartiger Trennzellen bestand. Eine Zelle besaß folgende Anordnung von Membranen und Spacern (von der Kathoden- zur Anodenseite): Bipolare Membran (Anionenaustauschermembran / Kationenaustauschermembran), Konzentratspacer (Milchsäure), Anionenaustauschermembran, Diluatspacer, Kationenaustauschermembran, Konzentratspacer (Amin), nur letzte Zelle: Bipolare Membran (Anionenaustauschermembran / Kationenaustauschermembran). An der Anode und Katode des Stacks befanden sich darüber hinaus Endspacer zur Abgrenzung der Räume, in welchen die Elektroden von einer Elektrolytlösung (0,25 M Natriumsulfatlösung) umströmt wurden.

Verwendete Membranen:

- Kationenaustauschermembran - PC SK (PC Cell), Polyestergewebe besetzt mit Sulfonsäuregruppen
- Anionenaustauschermembran - PC 100 D (PC Cell), Polyestergewebe besetzt mit Ammoniumgruppen
- bipolare Membran - bipolar type PCXZ (PC Cell)

Für die Trennung von Dimethylisopropylammoniumlactat in Amin und Milchsäure mittels Elektrodialyse, wurde das Salz zunächst mit Wasser auf eine Konzentration von 10 Gewichtsprozenten verdünnt. Die Lactatlösung wurde durch den Raum zwischen benachbarten Anionen- und Kationenaustauschermembranen gepumpt, während die beiden Konzentratlösungen (zu Beginn des Versuches vollentsalztes Wasser) durch die Räume zwischen einer bipolaren Membran und einer Anionenaustauschermembran (Milchsäure) bzw. einer Kationenaustauschermembranen und einer bipolaren Membran (Amin) floss. Die Elektrodialyse erfolgte bei 25 °C, einer Spannung von 10 V und einer maximalen Stromstärke von 3,2 A für 5 Stunden.

Die Konzentratlösung des Dimethylisopropylamins enthielt anschließend 4,06 Gewichtsprozente Amin, die andere Konzentratlösung enthielt 4,32 Gewichtsprozente Milchsäure. 84 % des Lactats wurden in Milchsäure und Amin gespalten.

Anschließend wurde die Milchsäurelösung destillativ eingeengt bis eine 90 %ige Lösung erhalten wurde. Auf gleichem Wege wurde das Wasser vollständig aus der Aminlösung entfernt.

Beispiel 11: Verfahrensschema zur Nutzung thermoreversibler Neutralisationsreaktionen

Figur 6 zeigt schließlich ein Verfahrensschema zur Nutzung thermoreversibler Neutralisationsreaktionen von organischen Aminen und Säuren zur thermochemischen Speicherung, wobei hier die Basenkomponente im Prozess des "Aufladens" durch Destillation abgetrennt wird. Die benötigte Prozesswärme kann durch Abwärmen der Industrie, solarthermische Anlagen oder andere Wärmequellen auf Nieder- und Mitteltemperaturniveau bereitgestellt werden.

Am Ort der Abwärmequelle befindet sich ein Vorlagebehälter B1 für das Produkt aus Basen und Säuren. Aus diesem wird mit der Pumpe P1 Flüssigkeit in den Reaktionsbehälter B2 gefördert, wo unter Ausnutzung von Abwärmen der Industrie, solarthermischer Anlagen oder anderer Wärmequellen auf Nieder- und Mitteltemperaturniveau (max. 200 °C) die endotherme Rückreaktion zu den beiden Edukten stattfindet. Gleichzeitig erfolgt eine Destillation einer Komponente (z.B. Säure), die über eine Vakuumpumpe P2 abgezogen, im Kondensator auskondensiert und im flüssigen Aggregatzustand im Behälter B3 gespeichert wird. Das zweite Edukt (Base) wird aus dem Behälter B2 mit der Pumpe P4 abgezogen und im Behälter B4 gespeichert. Beide Edukte (Säure und Base) werden z.B. durch einen LKW-Transport zum Verbraucher transportiert und dort in die beiden Vorratsbehältern B5 (Base) und B6 (Säure) gelagert. Mit Hilfe der Pumpen P5 und P6 werden bedarfsgemäß ermittelte Mengen an Edukt in den Reaktionsbehälter B7 gefördert. Hier findet die exotherme Neutralisationsreaktion statt. Die freiwerdende Wärme mit einem Temperaturniveau oberhalb der Umgebungstemperatur steht zur Nutzung z.B. zur Gebäudebeheizung zur Verfügung. Das im Rahmen der Neutralisationsreaktion gebildete Produkt aus Basen und Säuren wird im Vorratsbehälter B8 gelagert und z.B. durch einen LKW-Transport zurück zur Abwärmequelle transportiert und dort in den Vorratsbehälter B1 umgefüllt.

## Patentansprüche

1. Verwendung einer Zusammensetzung mit einer kinematischen Viskosität von maximal 600 * $10^{-6}$ $m^2/s$ bei 25°C, die ein Salz aus einer organischen Base und einer organischen Säure umfasst oder hieraus besteht, für die thermochemische Wärmespeicherung mittels einer reversiblen endothermen Spaltungsreaktion des Salzes in die freie organische Säure und die freie organische Base, wobei die Zusammensetzung
   entweder eine ionische Flüssigkeit ist,
   oder eine ionische Flüssigkeit enthält, die gegebenenfalls mit einem Lösungsmittel verdünnt ist,
   oder eine Flüssigkeit ist, die als Anion des Salzes eine polymere Base und/oder als Kation eine polymere Säure und gegebenenfalls zusätzlich ein Lösungsmittel enthält, oder ein bei Raumtemperatur festes Salz, das in einem Lösungsmittel dispergiert oder gelöst vorliegt, mit der Maßgabe, dass die diesem dispergierten oder gelösten Salz zugrundeliegende Base eine Stickstoff-Base ist und deren Molmasse kleiner als 250 g/Mol ist und/oder die diesem dispergierten oder gelösten Salz zugrundeliegende Säure eine Molmasse kleiner als 250 g/Mol besitzt und wobei das in der Zusammensetzung enthaltene Salz mittels einer reversiblen endothermen Spaltungsreaktion zumindest teilweise in die freie Säure und die freie Base getrennt werden kann.

2. Verwendung nach dem vorhergehenden Anspruch, wobei die endotherme Spaltungsreaktion unterhalb von 450°C, insbesondere unterhalb von 250°C durchgeführt werden kann.

3. Verwendung nach einem der vorhergehenden Ansprüche, wobei die dem Salz zugrundeliegende freie Base flüssig oder gasförmig ist oder als ein in einem Lösungsmittel gelöstes Polymer vorliegt.

4. Verwendung nach einem der vorhergehenden Ansprüche, wobei die dem Salz zugrundeliegende freie Säure flüssig oder gasförmig ist oder als ein in einem Lösungsmittel gelöstes Polymer vorliegt mit der Maßgabe, dass nur die freie Base oder die freie Säure ein Polymer sein können.

5. Verwendung nach einem der vorhergehenden Ansprüche, wobei die freie Base ein tertiäres Amin, ein Amidin, ein Guanidin oder ein stickstoffhaltiger Heterocyclus ist oder als Polymer diese funktionellen Gruppen enthält.

6. Verwendung nach einem der vorhergehenden Ansprüche, wobei die organische Säure eine Mono-Sulfonsäure oder ein Phenol oder eine Mono-Carbonsäure ist, insbesondere eine Alkylcarbonsäure oder eine Carbonsäure, ausgewählt aus Milchsäure, Bernsteinäure, Essigäure, Weinsäure, Äpfelsäure, Glutarsäure und Mischungen hieraus.

7. Verwendung nach einem der vorhergehenden Ansprüche, wobei die organische Säure oder die organische Base im Zug der endothermen Spaltungsreaktion entweder als Reinsubstanz oder mit dem gegebenenfalls vorhandenen Lösungsmittel mittels einer Destillation, insbesondere einer azeotropen Destillation abdestillierbar ist, oder mittels eines Membrantrennverfahrens voneinander getrennt werden.

8. Verwendung nach dem vorhergehenden Anspruch, wobei die Destillation bei einem Druck von bis zu 20000 hPa, insbesondere bei einem Druck von 2 bis 2000 hPa, beispielsweise bei einem Druck von 20 bis 1000 hPa, erfolgt.

9. Verwendung nach einem der beiden vorhergehenden Ansprüche, wobei die Differenz der $pk_s$ Werte der freien Säure und der freien Base, insbesondere wenn die freie Säure einen $pk_s$ Wert größer 4 aufweist, kleiner oder gleich 10 ist und insbesondere 3 bis 9 beträgt.

10. Verwendung nach einem der vorhergehenden Ansprüche, wobei die Zusammensetzung das Salz, einen Prozesshilfsstoff, insbesondere in einem Gewichtsanteil von maximal 10 Gew.-%, und gegebenenfalls das Lösungsmittel umfasst oder hieraus besteht und wobei der Prozesshilfsstoff ausgewählt ist aus Emulgatoren, Dispersionsstabilisatoren, Antioxidantien, Wärmeübergangsmodifikatoren und Viskositätsmodifikatoren oder mehrerer dieser Komponenten.

11. Verfahren zur thermochemischen Wärmespeicherung, wobei eine Zusammensetzung gemäß einem der vorhergehenden Ansprüche unter Zufuhr von Wärme einer endothermen Spaltungsreaktion unterworfen wird, wobei aus dem Salz aus der organischen Base und der organischen Säure zumindest teilweise die freie organische Säure und die freie organische Base gebildet werden und wobei die freie organische Säure und die freie organische Base in einem Zustand vorliegen, in dem sie voneinander getrennt werden können, sodass durch Reaktion von Säure und Base die Wärme wieder freisetzbar ist.

12. Verfahren nach dem vorhergehenden Anspruch, wobei
die freie organische Säure und die freie organische Base voneinander getrennt werden.

13. Vorrichtung zur Durchführung eines Verfahrens zur thermochemischen Wärmespeicherung mittels der Zusammensetzung nach einem der vorhergehenden Ansprüche, wobei die Zusammensetzung bei 25 °C eine kinematische Viskosität von maximal $600 * 10^{-6}$ $m^2/s$ aufweist, ein Salz aus einer organischen Base und einer organischen Säure umfasst oder hieraus besteht und wobei in dem Verfahren das Salz durch eine reversible endotherme Spaltungsreaktion zumindest teilweise in die freie Säure und die freie Base getrennt wird, umfassend
einen Vorratsbehälter enthaltend die Zusammensetzung für die thermochemische Wärmespeicherung,
einen Behälter für die freie organische Base und/oder einen Behälter für die freie organische Säure,
einen Reaktor zur Durchführung der endothermen Spaltungsreaktion und
eine Separationseinrichtung zur Trennung von freier organische Base und freier organischer Säure.

14. Vorrichtung nach dem vorhergehenden Anspruch, wobei die Vorrichtung zusätzlich einen Reaktor zur Durchführung der exothermen Reaktion zwischen organischer Säure und organischer Base enthält, mittels dem die gespeicherte Wärme wieder freigesetzt werden kann.

**Claims**

1. Use of a composition which has a kinematic viscosity of not more than $600 * 10^{-6}$ $m^2/s$ at 25°C and comprises or consists of a salt of an organic base and an organic acid for thermochemical storage of heat by means of a reversible endothermic dissociation reaction of the salt into the free organic acid and the free organic base, wherein the composition
either is an ionic liquid,
or contains an ionic liquid which is optionally diluted with a solvent
or is a liquid which contains a polymeric base as anion of the salt and/or a polymeric acid as cation and optionally additionally a solvent,
or is a salt which is solid at room temperature and is present as a dispersion or solution in a solvent, with the proviso

that the base on which this dispersed or dissolved salt is based is a nitrogen base and the molar mass thereof is less than 250 g/mol and/or the acid on which this dispersed or dissolved salt is based has a molar mass of less than 250 g/mol and wherein the salt present in the composition can be separated at least partially into the free acid and the free base by means of a reversible endothermic dissociation reaction.

**2.** Use according to the preceding claim, wherein the endothermic dissociation reaction can be carried out below 450°C, in particular below 250°C.

**3.** Use according to either of the preceding claims, wherein the free base on which the salt is based is liquid or gaseous or present as a polymer dissolved in a solvent.

**4.** Use according to any of the preceding claims, wherein the free acid on which the salt is based is liquid or gaseous or is present as a polymer dissolved in a solvent, with the proviso that only the free base or the free acid can be a polymer.

**5.** Use according to any of the preceding claims, wherein the free base is a tertiary amine, an amidine, a guanidine or a nitrogen-containing heterocycle or, as polymer, contains these functional groups.

**6.** Use according to any of the preceding claims, wherein the organic acid is a monosulphonic acid or a phenol or a monocarboxylic acid, in particular an alkylcarboxylic acid or a carboxylic acid selected from among lactic acid, succinic acid, acetic acid, tartaric acid, malic acid, glutaric acid and mixtures thereof.

**7.** Use according to any of the preceding claims, wherein the organic acid or the organic base can be distilled off either as pure substance or together with the solvent which is optionally present during the course of the endothermic dissociation reaction by means of a distillation, in particular an azeotropic distillation, or can be separated from one another by means of a membrane separation process.

**8.** Use according to the preceding claim, wherein the distillation is carried out at a pressure of up to 20,000 hPa, in particular at a pressure of from 2 to 2000 hPa, for example at a pressure of from 20 to 1000 hPa.

**9.** Use according to either of the two preceding claims, wherein the difference between the $pk_a$ values of the free acid and the free base is, particularly when the free acid has a $pk_a$ value of greater than 4, less than or equal to 10 and in particular is from 3 to 9.

**10.** Use according to any of the preceding claims, wherein the composition comprises or consists of the salt, a process auxiliary, in particular in a proportion by weight of not more than 10% by weight, and optionally the solvent and wherein the process auxiliary is selected from emulsifiers, dispersion stabilizers, antioxidants, heat transfer modifiers and viscosity modifiers or a plurality of these components.

**11.** Method for thermochemical storage of heat, wherein a composition according to any of the preceding claims is subjected to an endothermic dissociation reaction with introduction of heat, wherein the free organic acid and the free organic base are at least partially formed from the salt of the organic base and the organic acid and wherein the free organic acid and the free organic base are present in a state in which they can be separated from one another so that the heat can be liberated by reaction of acid and base.

**12.** Method according to the preceding claim, wherein the free organic acid and the free organic base are separated from one another.

**13.** Apparatus for carrying out a method for thermochemical storage of heat by means of the composition according to any of the preceding claims, wherein the composition has a kinematic viscosity at 25°C of not more than 600 * $10^{-6}$ $m^2/s$ and comprises or consists of a salt of an organic base and an organic acid and wherein the salt is at least partially separated into the free acid and the free base by means of a reversible endothermic dissociation reaction in said method, which comprises
a stock vessel containing the composition for thermochemical storage of heat,
a vessel for the free organic base and/or a vessel for the free organic acid,
a reactor for carrying out the endothermic dissociation reaction and
a separation device for separating free organic base and free organic acid.

**14.** Apparatus according to the preceding claim, wherein the apparatus additionally contains a reactor for carrying out the endothermic reaction between organic acid and organic base by means of which the stored heat can be liberated again.

**Revendications**

**1.** Utilisation d'une composition ayant une viscosité cinématique d'au maximum 600 * $10^{-6}$ $m^2/s$ à 25 °C, qui comprend ou consiste en un sel d'une base organique et d'un acide organique, pour l'accumulation thermochimique de chaleur au moyen d'une réaction de dissociation endothermique réversible du sel en l'acide organique libre et la base organique libre, la composition
soit étant un liquide ionique,
soit contenant un liquide ionique, qui est éventuellement dilué avec un solvant,
ou étant un liquide qui contient en tant qu'anion du sel une base polymère et/ou en tant que cation un acide polymère et éventuellement en plus un solvant,
ou un sel solide à la température ambiante, qui se trouve dissous ou dispersé dans un solvant, étant entendu que la base formant ce sel dispersé ou dissous est une base azotée et dont la masse molaire est inférieure à 250 g/mole et/ou l'acide à la base de ce sel dispersé ou dissous présente une masse molaire inférieure à 250 g/mole et le sel contenu dans la composition pouvant être au moins en partie dissocié en l'acide libre et la base libre au moyen d'une réaction de dissociation endothermique réversible.

**2.** Utilisation selon la revendication précédente, dans laquelle
la réaction de dissociation endothermique peut être effectuée au-dessous de 450 °C, en particulier au-dessous de 250 °C.

**3.** Utilisation selon l'une quelconque des revendications précédentes, dans laquelle la base libre formant le sel est liquide ou gazeuse ou se trouve sous forme d'un polymère dissous dans un solvant.

**4.** Utilisation selon l'une quelconque des revendications précédentes, dans laquelle l'acide libre à la base du sel est liquide ou gazeux ou se trouve sous forme d'un polymère dissous dans un solvant, étant entendu que seule la base libre ou seul l'acide libre peut être un polymère.

**5.** Utilisation selon l'une quelconque des revendications précédentes, dans laquelle la base libre est une amine tertiaire, une amidine, une guanidine ou un hétérocycle azoté ou en tant que polymère contient ces groupes fonctionnels.

**6.** Utilisation selon l'une quelconque des revendications précédentes, dans laquelle l'acide organique est un acide monosulfonique ou un phénol ou un acide monocarboxylique, en particulier un acide alkylcarboxylique ou un acide carboxylique choisi parmi l'acide lactique, l'acide succinique, l'acide acétique, l'acide tartrique, l'acide malique, l'acide glutarique et des mélanges de ceux-ci.

**7.** Utilisation selon l'une quelconque des revendications précédentes, dans laquelle l'acide organique ou la base organique est séparable par distillation au cours de la réaction de dissociation endothermique, soit sous forme de substance pure, soit avec le solvant éventuellement présent, au moyen d'une distillation, en particulier d'une distillation azéotropique, ou
sont séparés l'un de l'autre au moyen d'un procédé de séparation sur membrane.

**8.** Utilisation selon la revendication précédente, dans laquelle
la distillation s'effectue sous une pression de jusqu'à 20 000 hPa, en particulier sous une pression de 2 à 2 000 hPa, par exemple sous une pression de 20 à 1 000 hPa.

**9.** Utilisation selon l'une quelconque des deux revendications précédentes, dans laquelle la différence des valeurs $pK_a$ de l'acide libre et de la base libre, en particulier lorsque l'acide libre présente une valeur $pK_a$ supérieure à 4, est inférieure ou égale à 10 et en particulier vaut de 3 à 9.

**10.** Utilisation selon l'une quelconque des revendications précédentes, dans laquelle la composition comprend ou consiste en le sel, un adjuvant de processus, en particulier en une proportion pondérale d'au maximum 10 % en poids, et éventuellement le solvant, et dans laquelle l'adjuvant de processus est choisi parmi des émulsifiants, des stabilisants de dispersion, des antioxydants, des modificateurs de transfert thermique et des modificateurs de viscosité

ou plusieurs de ces composants.

11. Procédé pour l'accumulation thermochimique de chaleur, dans lequel
on soumet à une réaction de dissociation endothermique une composition selon l'une quelconque des revendications précédentes, avec apport de chaleur, à partir du sel de la base organique et de l'acide organique étant formés au moins en partie l'acide organique libre et la base organique libre, et l'acide organique libre et la base organique libre se trouvant en un état dans lequel ils peuvent être séparés l'un de l'autre, de sorte que la chaleur peut de nouveau être dégagée par réaction de l'acide et de la base.

12. Procédé selon la revendication précédente, dans lequel
on sépare l'un de l'autre l'acide organique libre et la base organique libre.

13. Dispositif destiné à la mise en oeuvre d'un procédé pour l'accumulation thermochimique de chaleur au moyen de la composition selon l'une quelconque des revendications précédentes, la composition ayant à 25 °C une viscosité cinématique d'au maximum $600 * 10^{-6}$ $m^2/s$, comprenant ou consistant en un sel d'une base organique et d'un acide organique, et dans le procédé le sel étant au moins en partie dissocié en l'acide libre et la base libre par une réaction de dissociation endothermique réversible, comprenant un réservoir contenant la composition pour l'accumulation thermochimique de chaleur,
un récipient pour la base organique libre et/ou un récipient pour l'acide organique libre,
un réacteur destiné à l'exécution de la réaction de dissociation endothermique et
un dispositif de séparation destiné à la séparation de la base organique libre et de l'acide organique libre.

14. Dispositif selon la revendication précédente,
le dispositif contenant en plus un réacteur destiné à l'exécution de la réaction exothermique entre l'acide organique et la base organique, à l'aide duquel la chaleur accumulée peut être de nouveau dégagée.

Fig. 1

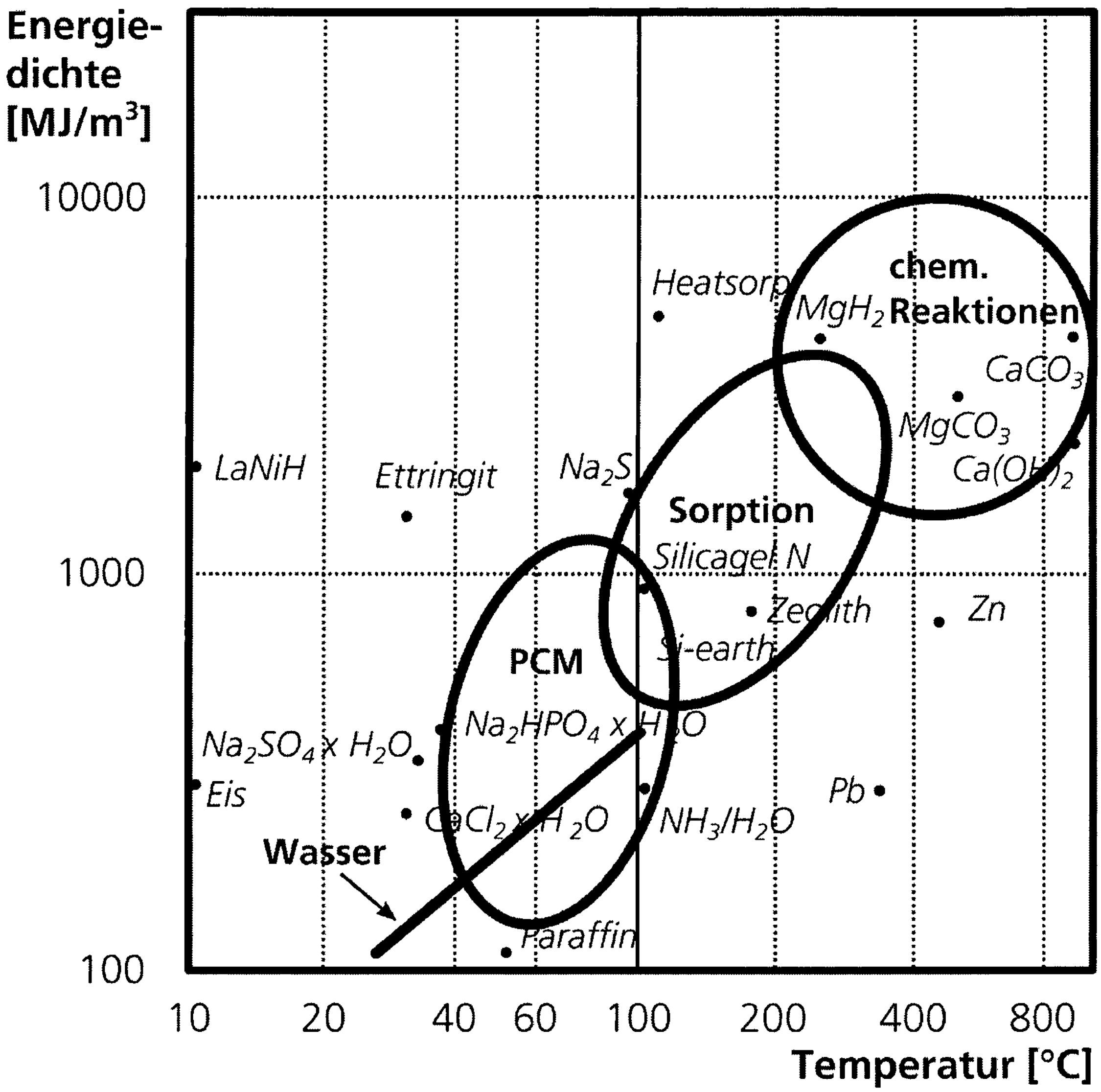
Energiedichte [MJ/m³]
10000
1000
100
10
20
40
60
100
200
400
800
Temperatur [°C]
chem. Reaktionen
Heatsorp
MgH2
CaCO3
MgCO3
Ca(OH)2
LaNiH
Ettringit
Na2S
Sorption
Silicagel N
Zeolith
Zn
Si-earth
PCM
Na2HPO4 x H2O
Na2SO4 x H2O
Eis
CaCl2 x H2O
NH3/H2O
Pb
Wasser
Paraffin

Fig. 2

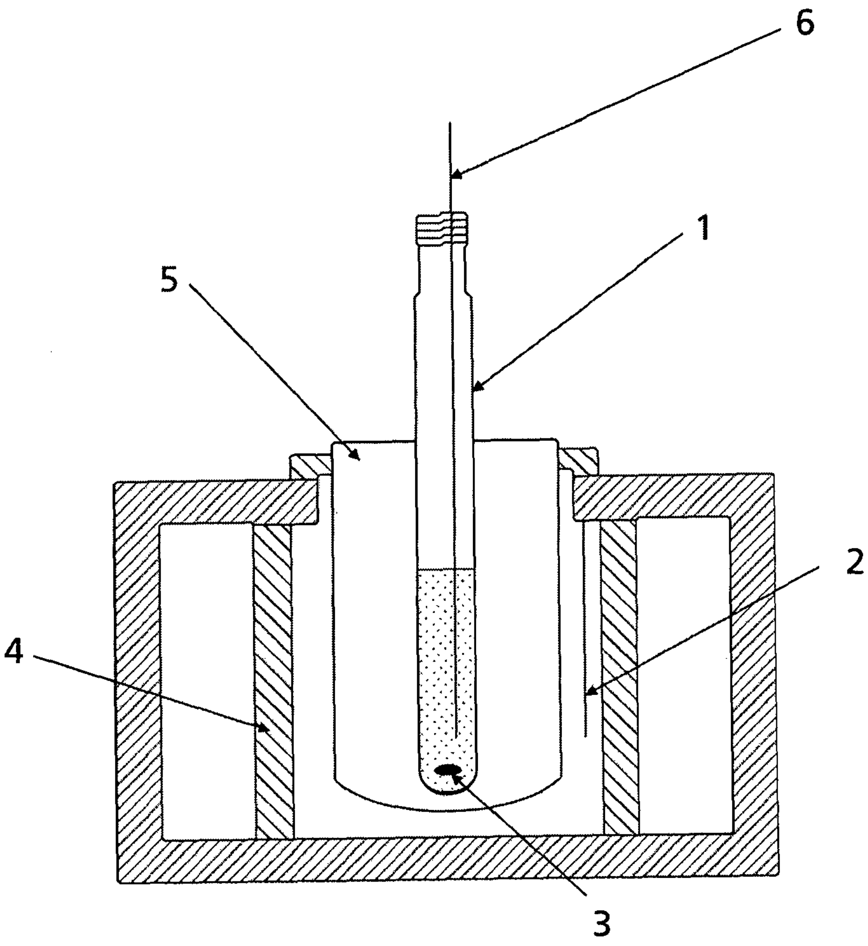
6
1
5
2
4
3

Fig. 3

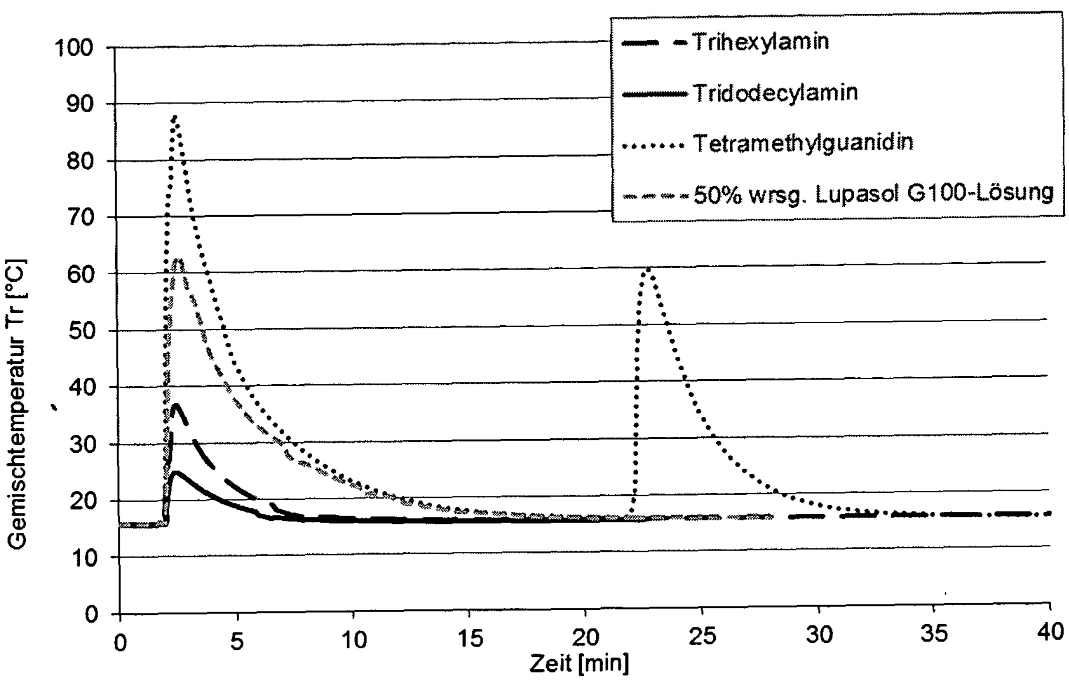
Trihexylamin
Tridodecylamin
Tetramethylguanidin
50% wrsg. Lupasol G100-Lösung
Gemischtemperatur Tr [°C]
Zeit [min]
100
90
80
70
60
50
40
30
20
10
0
0
5
10
15
20
25
30
35
40

Fig. 4

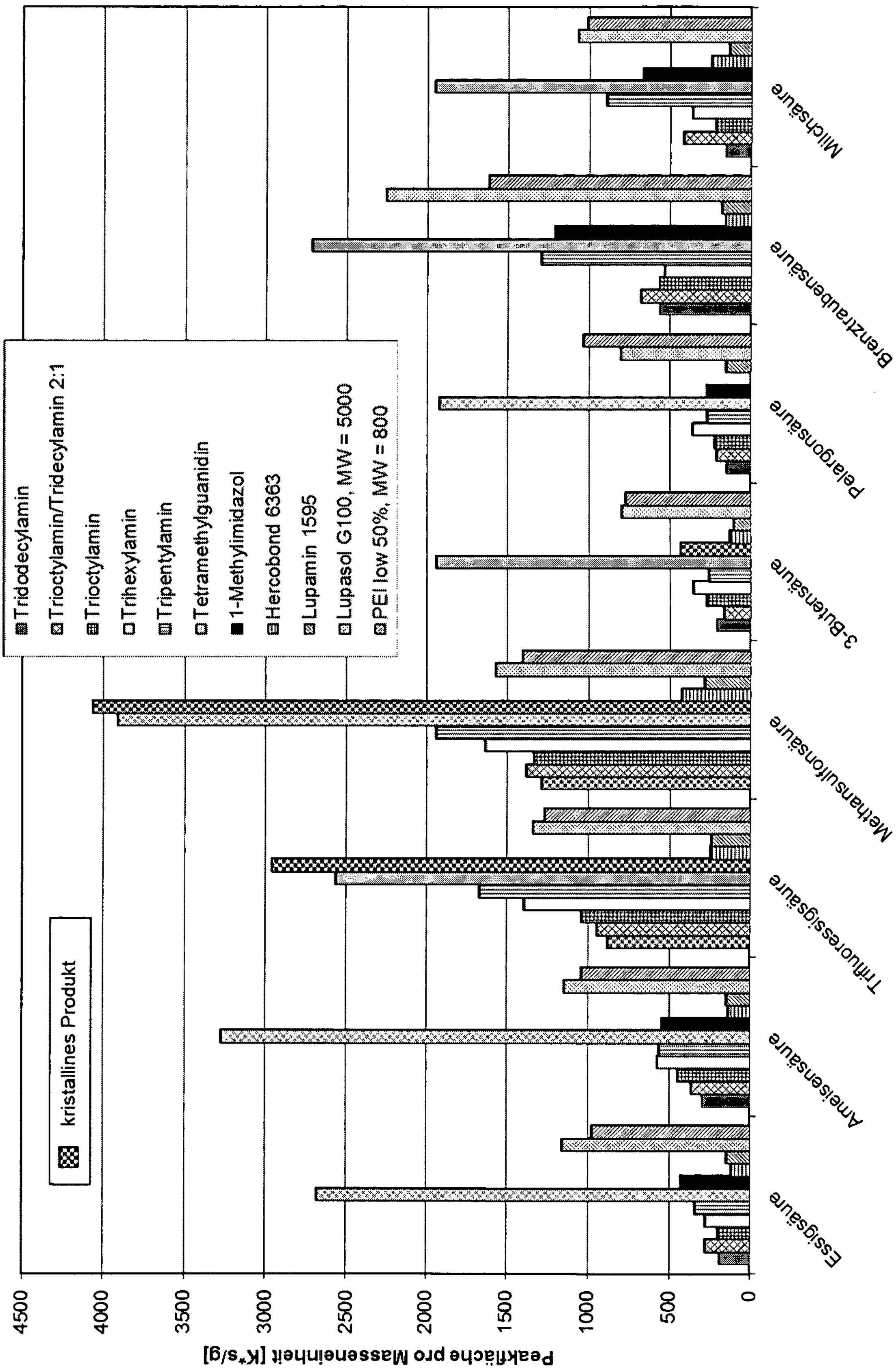
kristallines Produkt
Tridodecylamin
Trioctylamin/Tridecylamin 2:1
Trioctylamin
Trihexylamin
Tripentylamin
Tetramethylguanidin
1-Methylimidazol
Hercobond 6363
Lupamin 1595
Lupasol G100, MW = 5000
PEI low 50%, MW = 800
Peakfläche pro Masseneinheit [K*s/g]
4500
4000
3500
3000
2500
2000
1500
1000
500
0
Essigsäure
Ameisensäure
Trifluoressigsäure
Methansulfonsäure
3-Butensäure
Pelargonsäure
Brenztraubensäure
Milchsäure

Fig. 5a

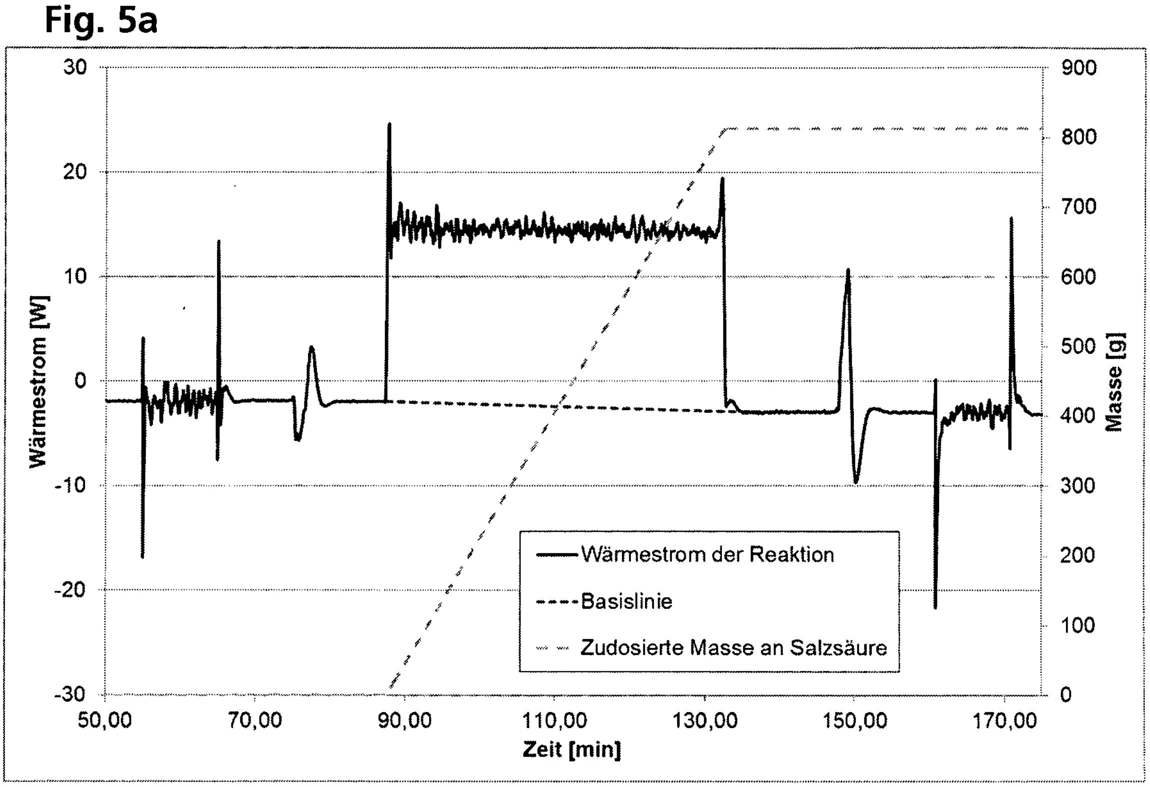
30
20
10
0
-10
-20
-30
Wärmestrom [W]
900
800
700
600
500
400
300
200
100
0
Masse [g]
50,00
70,00
90,00
110,00
130,00
150,00
170,00
Zeit [min]
Wärmestrom der Reaktion
Basislinie
Zudosierte Masse an Salzsäure

Fig. 5b

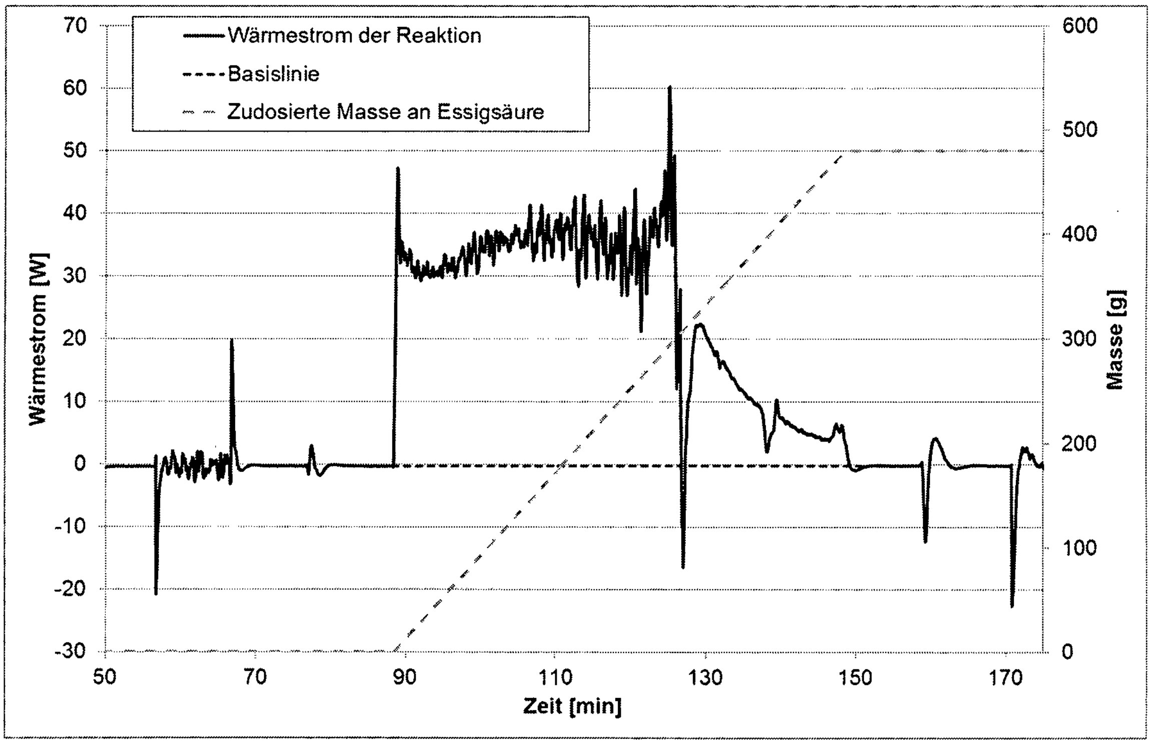
70
60
50
40
30
20
10
0
-10
-20
-30
Wärmestrom [W]
600
500
400
300
200
100
0
Masse [g]
50
70
90
110
130
150
170
Zeit [min]
Wärmestrom der Reaktion
Basislinie
Zudosierte Masse an Essigsäure

Fig. 6

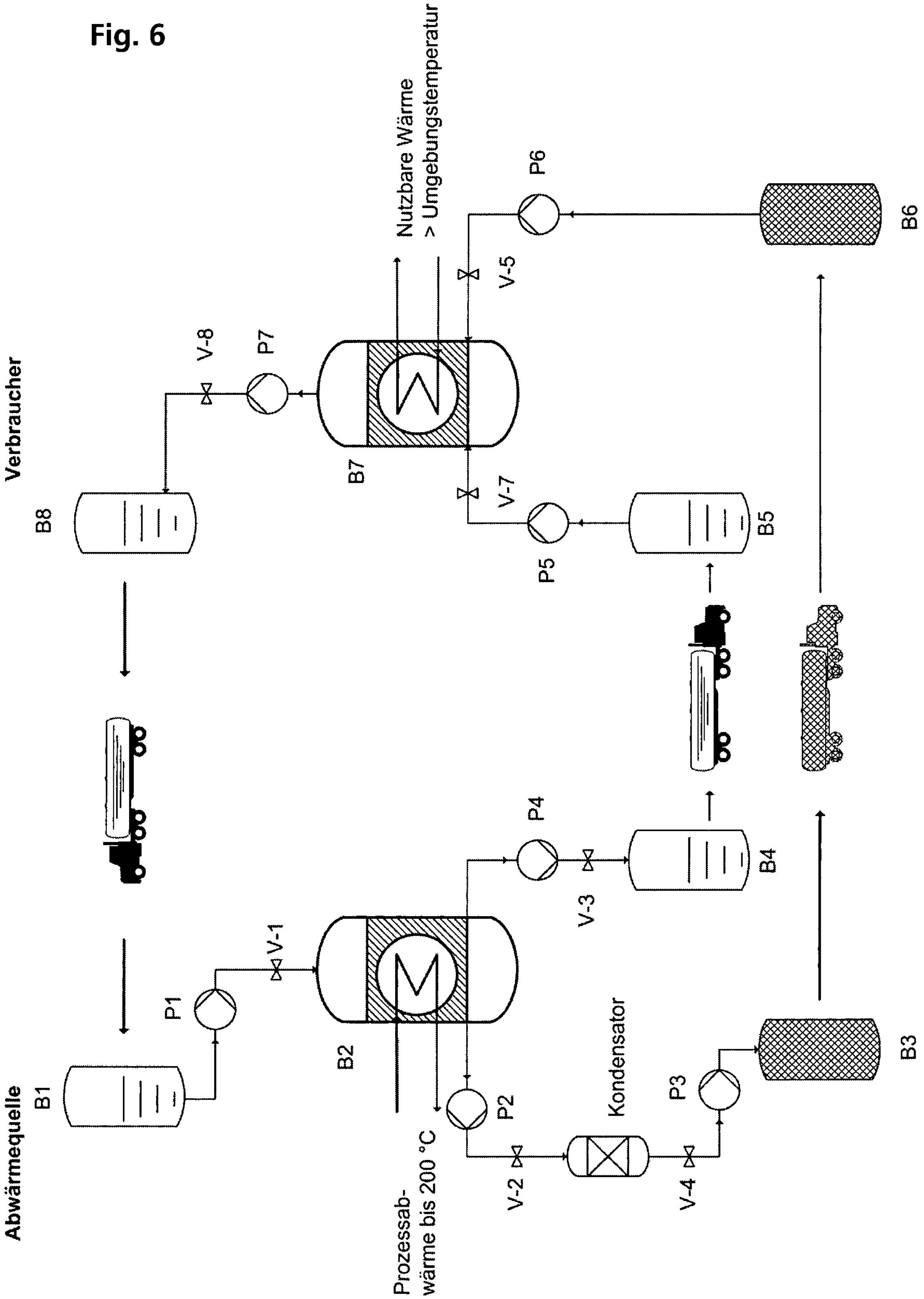
Abwärmequelle
Verbraucher
B1
B2
B3
B4
B5
B6
B7
B8
P1
P2
P3
P4
P5
P6
P7
V-1
V-2
V-3
V-4
V-5
V-7
V-8
Kondensator
Prozessab-
wärme bis 200 °C
Nutzbare Wärme
> Umgebungstemperatur

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4054126 A
- DE 3342847
- US 4303121 A
- US 4319627 A
- DE 3025817 A1


### In der Beschreibung aufgeführte Nicht-Patentliteratur


- *Renewable and Sustainable Energy Reviews,* 2009, vol. 13, 2385
- **WENTWORTH W.E. et al.** Simple thermal decomposition reactions for storage of solar thermal energy. *SOLAR ENERGY,* 1976, vol. 18 (3), 205-214
- **RIESEN.** Bilanz-Reaktionskalorimetrie. *Thermochimica Acta,* 1987, vol. 119, 219-222